# FASCICULE DE BREVET EUROPEEN

(11) **EP 3 209 088 B1**
(45) Date de publication et mention de la délivrance du brevet: **09.01.2019**
(21) Numéro de dépôt: 17154814.2
(22) Date de dépôt: 06.02.2017
(51) Int. Cl.: H04W 84/04, H04W 16/14, H04W 72/08, H04W 72/04

(54) **SYSTEME INTEGRE DE RADIOCOMMUNICATIONS A COUVERTURE CELLULAIRE HIERARCHIQUE ORDONNEE**
INTEGRIERTES FUNKKOMMUNIKATIONSSYSTEM MIT GEORDNETER HIERARCHISCHER MOBILFUNKGEBIETSABDECKUNG
INTEGRATED RADIO-COMMUNICATION SYSTEM WITH ORDERED HIERARCHICAL CELL COVERAGE

(30) Priorité: 22.02.2016 FR 1600304
(43) Date de publication de la demande: 23.08.2017
(73) Titulaire: Thales, 92400 Courbevoie (FR)
(72) Inventeur: CHUBERRE, Nicolas, François, Jean, 31100 Toulouse (FR); MICHEL, Cyril, 31100 Toulouse (FR); COMBELLES, Laurent, 31100 Toulouse (FR); CALMETTES, Thibaud, 31100 Toulouse (FR)
(74) Mandataire: Tanguy, Yannick

(56) Documents cités:
- US-A1- 2002 090 942
- US-A1- 2008 287 124
- "Satellite Earth Stations and Systems (SES); Advanced satellite based scenarios and architectures for beyond 3G systems", TECHNICAL REPORT, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. SES MSS, no. V1.1.1, 1 mars 2010 (2010-03-01), XP014046267,

## Description

La présente invention concerne un système intégré de radiocommunications à couverture cellulaire hiérarchique ordonnée ou à cellules parapluie, incluant en particulier un système satellitaire, intégré en complément de couverture avec un ou plusieurs systèmes de radiocommunications cellulaires terrestres à cellules de taille plus petite.

Un tel système intégré est configuré pour acheminer notamment un trafic de données asymétrique, chargé majoritairement sur la voie montante des cellules.

La présente invention concerne également un procédé de radiocommunications cellulaire pour acheminer notamment un trafic de données asymétrique chargé majoritairement sur la voie montante, le procédé de radiocommunications étant mis en oeuvre par le système intégré de radiocommunications à cellules parapluie en permettant une exploitation optimale des ressources spectrales disponibles à chaque niveau de couverture.

Les réseaux de radiocommunications cellulaires se diversifient actuellement afin de supporter non seulement les services classiques de voix, vidéo et d'Internet mais également le trafic croissant des communications à partir de machines ou d'objets. L'internet des objets IoT (en anglais « Internet of Thing ») est en plein essor et adresse une multitude de domaines d'applications dont certains exigent un service de grande fiabilité sur une couverture globale. Ainsi dans le domaine des transports, les communications entre machines permettent un suivi et un contrôle à distance de marchandises acheminées par voie maritime, aérienne et/ou terrestre.

L'enjeu des communications entre machines est donc d'offrir l'ubiquité de service à moindre coût et au temps de déploiement d'infrastructure le plus rapide.

Cette ubiquité de service est aussi un enjeu pour certaines applications bas débit critiques qui requièrent une disponibilité de service importante, comme par exemple des télécommunications sécuritaires.

Ainsi, l'intégration d'une composante satellitaire dans les réseaux cellulaires terrestre est recherchée pour répondre au besoin d'ubiquité de ces nouveaux services Iot caractérisés le plus souvent par un trafic sporadique de données à bas débit émises par salves.

L'intégration d'une composante satellitaire est une solution bien connue pour répondre au besoin d'ubiquité des services classiques de voix, vidéo et d'Internet.

Une première famille de solutions actuelles de communications par satellite, est basée sur l'utilisation de satellites géostationnaires, qui offrent la couverture globale et la fiabilité de service requises pour ces services classiques. Toutefois, en comparaison des réseaux terrestres, les infrastructures à réseaux géostationnaires sont aussi connues pour un coût de service et des coûts de terminaux importants, ainsi qu'une performance en termes de qualité de service et de latence relativement médiocre.

La dégradation de la latence est liée à un temps de transit de l'information important en raison de la distance séparant le satellite de la surface de la Terre, ce qui peut impacter négativement la qualité de service pour les applications temps réel.

La dégradation de la qualité du service pour un système à satellite géostationnaire peut être également due au manque de diversité spatiale et à la stationnarité du trajet de propagation entre un terminal usager et le satellite. Lorsqu'un chemin de propagation est soumis à de fortes atténuations voire bloqué, et si le terminal est fixe, ces conditions de propagations ne changeront pas. Les données ne peuvent être transmises, à moins de déplacer le terminal lui-même.

Une deuxième famille de solutions actuelles de communications par satellites est fondée sur l'utilisation de satellites organisés en constellation et évoluant sur des orbites non géostationnaires NGSO (en anglais « Non Geo Synchronous Orbit). Parmi les systèmes NGSO, les systèmes satellitaires utilisant des satellites à orbites basses LEO (en anglais « Low Earth Orbit »), tels que les systèmes commerciaux Globalstar ou Iridium, permettent de diminuer la latence au travers d'un faible temps de transit et d'améliorer la qualité de service au travers d'une diversité dynamique des conditions de propagation offertes par les satellites en visibilité de la constellation LEO.

Dans ces deux familles de solution, le coût du service est lié à la capacité limitée de l'infrastructure et du spectre alloué au service mobile par satellite MSS (en anglais « Mobile Satellite Service ») accessible notamment en dessous de 3 GHz.

Dans ces deux familles de solution, les terminaux sont bi-modes, dans le sens où ils sont configurés pour communiquer au choix avec les satellites via une première interface sans fil ou avec les stations relais d'un réseau cellulaire terrestre via une deuxième interface sans fil.

Nonobstant le fait que le marché relativement limité, adressé par ces systèmes commerciaux satellitaires, n'incite pas les constructeurs de terminaux à diversifier leur gamme de produits, ni à chercher à réduire leurs coûts et/ou leurs encombrements, une première variante et une deuxième variante d'intégration de la composante satellitaire et de la composante cellulaire terrestre pour la fourniture de services classiques ont été proposés afin de rendre plus attractive la production des terminaux bi-modes.

Selon la première variante, l'interface radio du réseau cellulaire est réutilisée dans le système satellite en faisant fonctionner les liaisons entre les terminaux et les satellites dans une bande de fréquence spécifique, à proximité de la bande de service MS (en anglais « Mobile Service ») beaucoup plus large allouée au système cellulaire terrestre. L'impact sur les terminaux est ainsi limité à l'étage radio qui doit étendre le cas échéant sa bande de fréquences voire à quelques modifications protocolaires (par exemple des modifications concernant le protocole de contrôle de puissance, le mécanisme de synchronisation, le protocole d'accès à contention) pour permettre une opération optimale dans le système satellite géostationnaire. Une telle variante est décrite par l'union internationale des télécommunications ITU (en anglais « International Télécommunication Union ») dans le document publié sous la référence Recommendation ITU-R M.2047-0(12/2013), intitulé « Detailed specifications of the satellite radio interfaces of International Mobile Télécommunications - Advanced (IMT Advanced) ».

Il est à remarquer que cette première variante peut être généralisée à deux infrastructures d'un système qui utilisent des spectres différents et l'accès au spectre est sans contrainte mutuelle.

Selon la deuxième variante, un système intégré satellite/cellulaire opérant dans les bandes de fréquence MSS (en anglais « Mobile Satellite Service ») allouées spécifiquement aux services mobiles satellites pourrait être développé. Cependant, il n'est pas possible d'utiliser simultanément la même bande de fréquences satellitaire MSS (en anglais « Mobile Satellite Service band ») sur une même zone de couverture partagée de la composante satellitaire et de la composante cellulaire terrestre. Le risque est de créer des zones d'exclusion du service satellite autour des stations de base terrestre ou de réduire la portée effective des stations de base. Il convient alors de prévoir un schéma de réutilisation de fréquences au niveau satellite qui contraint alors l'usage du spectre au niveau cellulaire terrestre. La gestion du spectre de ce système doit ainsi être sous contrôle d'opérateurs satellites, ce qui ne suscite pas l'adhésion des opérateurs cellulaires terrestres et par voie de conséquence, n'intéressent pas les fabricants de terminaux cellulaires.

Il est à remarquer que cette deuxième variante peut être généralisée à un système dans lequel un niveau inférieur réutilise le spectre non utilisé par un niveau supérieur sous le contrôle de l'opérateur du niveau supérieur.

Ainsi, suivant ces deux variantes la taille du marché accessible ou les conditions d'opération n'incitent pas les fabricants de terminaux à se lancer dans la production de ces terminaux bi-modes en dépit d'une relativement faible augmentation de la part des coûts récurrents de production des terminaux bi-modes.

Toutefois ici, et à l'inverse des services classiques dont la charge de trafic privilégie le volume de trafic sur la voie descendante par rapport à la voie montante et la voie descendante, les nouveaux services loT de l'Internet des Objets dont l'extension sans couture de la couverture est recherchée sont caractérisés par une charge de trafic asymétrique majoritaire sur la voie montante, et une composante de trafic de voie montante obéissant à une loi d'émission de salves de données à bas débit de manière sporadique.

On cherche ici à déterminer dans ce cas une architecture d'un système satellitaire qui permette une extension sans couture de la zone de couverture des réseaux cellulaires terrestres, notamment des réseaux 4G de quatrième génération ou des réseaux 5G de cinquième génération, pour des communications entre objets et une utilisation maximale du spectre alloué aux réseaux cellulaires terrestres hors de la totalité des zones de couverture des réseaux cellulaires terrestres.

US20080287124 divulgue un système de radiocommunication à couverture cellulaire hiérarchique ordonnée où les ressources fréquentielles partagées entre la voie descendante d'un système de communication satellitaire et la voie montante d'un système de communication cellulaire sont gérées par un "resource coordination controller" afin que le premier système (le satellite) ne perturbe pas le deuxième (réseau cellulaire).

US2002090942 divulgue un procédé d'allocation de ressources de fréquences partagées entre un réseau de communication terrestre et un système de communication entre des satellites et des bornes terrestres. Le procédé permet aux réseaux d'opérer indépendamment, la coordination se base sur des mesures effectuées par les équipements d'utilisateur.

De manière générale, le problème technique est d'augmenter la capacité de transmission sur sa voie montante d'un système de radiocommunications à une ou plusieurs cellules parapluie, intégré en complément de couverture, avec un ou plusieurs systèmes de radiocommunications cellulaires terrestres à cellules de taille plus petite, et configuré pour acheminer un trafic de données asymétrique correspondant à des communications entre objets, chargé majoritairement sur la voie retour du système de radiocommunications à cellules parapluie.

De manière supplémentaire, un deuxième problème technique est de diminuer la complexité des terminaux bi-modes capables d'accéder sélectivement au système de radiocommunications à cellules parapluie et réseaux cellulaires terrestres en fonction de sa position géographique et/ou des conditions de propagation observées.

A cet effet, l'invention est définie dans les revendications et a pour objet un système intégré de radiocommunication, à couverture cellulaire hiérarchique ordonnée, dans lequel une cellule de couverture de niveau supérieur couvre une ou plusieurs cellules de niveau inférieur. Les mises en oeuvre et/ou exemples de la description suivante qui ne sont pas couverts par les revendications ne sont pas considérés comme faisant partie de l'invention.

Ledit système intégré comprend :
.- un premier système de radiocommunication ayant un premier niveau de couverture N1 et une première station relai et un deuxième système de radiocommunication ayant un deuxième niveau de couverture N2 et une deuxième station relai, le premier niveau de couverture N1 étant supérieur au deuxième niveau de couverture N2; et
.- un ensemble de terminaux bi-modes, configurés pour utiliser sélectivement le premier système ou le deuxième système.

Le système intégré est caractérisé en ce que :
.- le premier système et le deuxième système sont configurés pour partager de manière simultanée une portion commune Bc d'une première bande B1 de fréquences respectivement sur une première voie montante d'accès à la première station relai et une deuxième voie montante d'accès à la deuxième station relai, et gérer respectivement des premières ressources de transmission partagées et des deuxièmes ressources de transmission qui utilisent la portion commune Bc de la première bande B1; et
.- le deuxième système de transmission de niveau inférieur N2 est libre de gérer ses deuxièmes ressources de transmission sans contrainte de coordination vis-à-vis du premier système de niveau supérieur N1, et
.- le premier système de niveau supérieur N1 est configuré pour ne pas perturber le deuxième système dans la portion commune Bc de bande de fréquences.

Le système intégré est également caractérisé en ce que le premier système est configuré pour transmettre des paquets de données sur un canal aléatoire à contention d'accès de première voie montante et pour gérer ses premières ressources sur ledit canal aléatoire, caractérisées par des tranches de temps et/ou des tranches de fréquence et/ou des codes d'accès, de manière optimale en termes de capacité de transmission du canal aléatoire,
.- en mesurant au niveau de la première station relai l'occupation en ressources de transmission des deuxièmes ressources radio actuellement utilisées par le deuxième système et des premières ressources partagées actuellement utilisées par le premier système, puis
.- en déterminant, en fonction de la mesure de l'occupation en ressources de transmission des deuxièmes ressources radio actuellement utilisées par le deuxième système et des premières ressources partagées actuellement utilisées par le premier système, les premières ressources en termes de tranches de temps et/ou des tranches de fréquence et/ou des codes d'accès à utiliser par de nouveaux terminaux bi-modes non localisés dans la couverture cellulaire du deuxième système, de façon à optimiser la capacité de transmission du canal aléatoire ; puis
.- en notifiant à l'aide d'un canal de signalisation diffusé sur la voie descendante aux terminaux bi-modes intéressés, non localisés dans la couverture cellulaire du deuxième système, les premières ressources à utiliser et déterminées précédemment.

Suivant des modes particuliers de réalisation, le système intégré de radiocommunication à couverture cellulaire hiérarchique ordonnée comprend l'une ou plusieurs des caractéristiques suivantes :
.- la première station relai du premier système comporte :
   .* un dispositif de mesure de l'occupation spectrale des deuxièmes ressources radio actuellement utilisées par le deuxième système, en déterminant l'énergie moyenne reçue dans une pluralité de canaux élémentaires de fréquence à partir d'une transformée à ondelettes ou une transformée de Fourier de l'énergie reçue d'un faisceau de couverture en réception de l'antenne de réception de la première station relai ; et/ou
   .* un dispositif de mesure de la distribution sur l'ensemble des codes d'accès et l'ensemble des tranches de l'énergie reçue d'un faisceau de réception de l'antenne de réception correspondant aux deuxièmes ressources radio actuellement utilisées par le deuxième système ;
.- lorsque la première station relai est mobile par rapport aux terminaux bi-modes, la première station relai du premier système comporte un dispositif de mesure d'une répartition géographique de l'occupation spectrale reçue par un ou plusieurs faisceaux de réception se recouvrant, déterminée à partir d'une pluralité de profils d'occupation spectrale mesurés à des instants différents le long de la trajectoire et d'un modèle prédictif de ladite trajectoire ;
.- le premier système est configuré pour gérer des premières ressources supplémentaires utilisant une deuxième bande B2 de fréquences réservées exclusivement à la première voie montante et les premières ressources partagées utilisant la portion commune Bc de la première bande B1, caractérisées par des tranches de temps et/ou des tranches de fréquence et/ou des codes d'accès, de manière optimale en termes de capacité maximale de transmission du canal aléatoire et de minimisation du taux de collision sur le canal aléatoire,
   .* en mesurant au niveau de la première station relai l'occupation des deuxièmes ressources radio actuellement utilisées par le deuxième système et des premières ressources partagées actuellement utilisées par le premier système, puis
   .* en déterminant, en fonction de la mesure de l'occupation des deuxièmes ressources radio actuellement utilisées par le deuxième système et des premières ressources partagées actuellement utilisées par le premier système, les premières ressources en termes de tranches de temps et/ou des tranches de fréquence et/ou des codes d'accès à utiliser par de nouveaux terminaux bi-modes, non localisés dans la couverture cellulaire du deuxième système, de façon à optimiser la capacité de transmission du canal aléatoire et à minimiser le taux de collision sur le canal aléatoire; puis
   .* en notifiant à l'aide d'un canal de signalisation diffusé sur la voie descendante vers les terminaux bi-modes intéressés, non localisés dans la couverture cellulaire du deuxième système, les premières ressources à utiliser et déterminées précédemment ;
.- le premier système est configuré pour répartir les premières ressources partagées de la portion commune de la première bande et les premières ressources supplémentaires exclusivement réservées au premier système, de façon à minimiser les collisions entre deux terminaux accédant au premier système via la première voie montante en utilisant la même première ressource de la première bande ou de la deuxième bande dans une cellule de couverture de premier niveau ;
.- le premier système est configuré pour répartir les premières ressources partagées de la portion commune de la première bande et les premières ressources supplémentaires exclusivement réservées au premier système, de façon à minimiser les collisions entre deux terminaux accédant pour l'un au premier système via la première voie montante et pour l'autre au deuxième système via la deuxième voie montante, et utilisant tous une même première ressource partagée de la portion commune de la première bande ;
.- le premier système est configuré pour répartir les premières ressources partagées de la portion commune de la première bande et les premières ressources supplémentaires de la deuxième bande exclusivement réservées au premier système, de façon à minimiser les collisions non discriminables des paquets de données reçus sur la première voie montante, le procédé de discrimination étant compris dans l'ensemble formé par : la technique générale de l'estimation conjointe à maximum de vraisemblance d'une séquence (JMLSE), la technique générale de l'annulation synchrone successive d'interférence (SIC) qui sépare deux signaux en fonction d'une différence de puissance existant entre lesdits deux signaux, la technique de l'annulation asynchrone successive d'interférence qui sépare deux signaux ayant le même rythme symbole en fonction d'un décalage temporel d'une fraction d'une période symbole existant entre lesdits signaux ; les techniques JMSLE et SIC appliquées dans le cas où le protocole d'accès aléatoire à contention utilise un protocole ALOHA segmenté à diversité et résolution de contention (CRDSA), la technique de séparation spatiale lorsque la station relai du premier système comporte une antenne à balayage électronique adaptatif, déterminé en fonction des caractéristiques des signaux reçus, ou à balayage déterministe, prédéterminé en fonction de critères incluant une date, une position géographique, et une direction privilégiée de l'antenne ;
.- le premier système comprend un récepteur configuré pour mettre en oeuvre un traitement combiné des signaux en provenance de plusieurs cellules de couverture de premier niveau, et le premier système est configuré pour répartir les premières ressources partagées de la portion commune de la première bande et les premières ressources supplémentaires de la deuxième bande exclusivement réservées au premier système, de façon à minimiser les collisions non discriminables des paquets de données reçus par le récepteur multifaisceaux, le procédé de discrimination étant fondé sur la différence de puissance reçue des signaux en provenance de différentes cellules de couverture de premier niveau, et compris dans l'ensemble formé par la technique générale de l'estimation conjointe à maximum de vraisemblance d'une séquence (JMLSE), la technique générale de l'annulation synchrone successive d'interférence (SIC), la technique de l'annulation asynchrone successive d'interférence, les techniques JMSLE et SIC appliquées dans le cas où le protocole d'accès aléatoire à contention utilise un protocole ALOHA segmenté à diversité et résolution de contention (CRDSA), et la technique de séparation spatiale lorsque la station relai du premier système comporte une antenne à balayage électronique ;
.- le procédé de discrimination est fondé en outre sur la différence en temps, fréquence, puissance, direction d'arrivée du faisceau des signaux en provenance de différentes cellules de couverture de premier niveau ;
.- les premier et deuxième systèmes comprennent en commun un récepteur configuré pour mettre en oeuvre un traitement combiné des signaux en provenance d'une cellule de couverture de premier niveau et d'au moins une cellule de couverture de deuxième niveau, et le premier système est configuré pour répartir les premières ressources partagées de la portion commune de la première bande et les premières ressources supplémentaires de la deuxième bande exclusivement réservées au premier système, de façon à minimiser les collisions non discriminables des paquets de données reçus par le récepteur multifaisceaux, le procédé de discrimination étant fondé sur la différence en temps, fréquence, puissance, direction d'arrivée du faisceau, des signaux en provenance de la cellule de couverture de premier niveau et de l'au moins une cellule de couverture de deuxième niveau, et compris dans l'ensemble formé par : la technique générale de l'estimation conjointe à maximum de vraisemblance d'une séquence (JMLSE), la technique générale de l'annulation synchrone successive d'interférence (SIC), la technique de l'annulation asynchrone successive d'interférence, les techniques JMSLE et SIC appliquées dans le cas où le protocole d'accès aléatoire à contention utilise un protocole ALOHA segmenté à diversité et résolution de contention (CRDSA), et la technique de séparation spatiale lorsque la station relai du premier système comporte une antenne à balayage électronique ;
.- les premier et deuxième systèmes sont configurés pour acheminer des trafics sporadiques de données pour des applications de communication entre machines ;
.- le premier système est un système de radiocommunication satellite comprenant et utilisant au moins un satellite géostationnaire (GSO) ou non géostationnaire (NGSO), et le deuxième système est un système de radiocommunication comprenant un ou plusieurs réseaux de stations relais parmi les stations de plateformes à altitude élevée (HAPS), les stations de base desservant des macro-cellules, les stations de base desservant des micro, pico ou femto cellules ; ou
   .- le premier système est un système de radiocommunication à altitude élevée comprenant et utilisant au moins stations de plateformes à altitude élevée (HAPS), et le deuxième système est un système de radiocommunication cellulaire comprenant un ou plusieurs réseaux de stations relais parmi les stations de base desservant des macro-cellules, les stations de base desservant des micro, pico ou femto cellules ; ou
   .- le premier système est un système de radiocommunication cellulaire comprenant un ou plusieurs réseaux de stations relais comprises parmi les stations de base desservant des macro-cellules, et le deuxième système est un système de radiocommunication cellulaire comprenant un ou plusieurs réseaux de stations relais comprises parmi les stations de base desservant des micro, pico ou femto cellules ;
.- le premier système est un système de radiocommunication satellitaire comprenant et utilisant une constellation de satellites défilant en orbites basses (LEO) ;
.- le système intégré de radiocommunication à couverture cellulaire hiérarchique ordonnée est configuré pour mettre en oeuvre les fonctionnalités d'un système de radiocommunication hétérogène de 5^{ème} génération combinant l'utilisation de stations de base desservant cellules parmi les micro, pico et femto cellules, de stations de base desservant des cellules de type Macro Cell, de stations plateformes à altitudes élevées HAPS et de systèmes satellitaires non géostationnaires ou géostationnaires.

L'invention a également pout objet un procédé de radiocommunication cellulaire, mis en oeuvre par un système intégré de radiocommunications à couverture cellulaire hiérarchique ordonnée dans lequel une cellule de couverture de niveau supérieur couvre une ou plusieurs cellules de niveau inférieur. Le système intégré de radiocommunication comprend :
.- un premier système de radiocommunication ayant un premier niveau de couverture N1 et une première station relai et un deuxième système de radiocommunication ayant un deuxième niveau de couverture N2 et une deuxième station relai, le premier niveau de couverture N1 étant supérieur au deuxième niveau de couverture N2; et
.- un ensemble de terminaux bi-modes, configurés pour utiliser sélectivement le premier système ou le deuxième système.

Le premier système et le deuxième système sont configurés pour partager de manière simultanée une portion commune Bc d'une première bande B1 de fréquences respectivement sur une première voie montante d'accès à la première station relai et une deuxième voie montante d'accès à la deuxième station relai, et gérer respectivement des premières ressources de transmission partagées et des deuxièmes ressources de transmission qui utilisent la portion commune Bc de la première bande B1. Le deuxième système de radiocommunication de niveau inférieur est libre de gérer ses deuxièmes ressources de transmission sans contrainte de coordination vis-à-vis du premier système de niveau supérieur, et le premier système de niveau supérieur N1 étant configuré pour ne pas perturber le deuxième système dans la portion de bande de fréquences commune. Le procédé de radiocommunication est caractérisé en ce qu'il comprend les étapes consistante en ce que :
.- dans une première étape, un premier ensemble de terminaux bi-modes connectés au premier système transmettent des paquets de données sur un canal aléatoire à contention d'accès de première voie montante en utilisant des premières ressources partagées de la portion commune Bc de la première bande, et un deuxième ensemble de terminaux, connectés au deuxième système, utilisent des deuxièmes ressources de la portion commune Bc de la première bande B1; puis
.- dans une deuxième étape, le premier système mesure au niveau de la première station relai l'occupation des deuxièmes ressources radio actuellement utilisées par le deuxième système et des premières ressources partagées actuellement utilisés par le premier système; ensuite
.- dans une troisième étape, en fonction de la mesure de l'occupation des deuxièmes ressources radio actuellement utilisées par le deuxième système et des premières ressources partagées actuellement utilisées par le premier système, le premier système détermine les premières ressources partagées en termes de tranches de temps et/ou des tranches de fréquence et/ou des codes d'accès à utiliser par de nouveaux terminaux bi-modes non localisés dans la couverture du deuxième système de façon à optimiser la capacité de transmission du canal aléatoire ; puis
.- dans une quatrième étape, le premier système notifie à l'aide d'un canal de signalisation diffusé sur la voie descendante aux terminaux bi-modes, non localisés dans la couverture du deuxième système, les informations pertinentes concernant les premières ressources à utiliser et déterminées dans la troisième étape.

Suivant des modes particuliers de réalisation, le procédé de radiocommunications cellulaire comprend l'une ou plusieurs des caractéristiques suivantes :
.- le premier système est configuré pour gérer des premières ressources supplémentaires utilisant une deuxième bande de fréquences réservée exclusivement à la première voie montante et les premières ressources partagées utilisant la portion commune Bc de la première bande B1, caractérisées par des tranches de temps et/ou des tranches de fréquence et/ou des codes d'accès, de manière optimale en termes de capacité maximale de transmission du canal aléatoire et de minimisation du taux de collision sur le canal aléatoire. Les troisième et quatrième étapes sont respectivement remplacées respectivement par des cinquième et sixième étapes consistant en ce que :
.- dans la cinquième étape, en fonction de la mesure de l'occupation des deuxièmes ressources radio actuellement utilisées par le deuxième système et des premières ressources actuellement utilisées par le premier système, le premier système détermine les premières ressources en termes de tranches de temps et/ou des tranches de fréquence et/ou des codes d'accès à utiliser par de nouveaux terminaux bi-modes, non localisés dans la couverture du deuxième système, de façon à optimiser la capacité de transmission du canal aléatoire et à minimiser le taux de collision sur le canal aléatoire; et
.- dans la sixième étape, le premier système notifie à l'aide d'un canal de signalisation diffusé sur la voie descendante aux terminaux bi-modes intéressés, non localisés dans la couverture cellulaire du deuxième système, les informations pertinentes concernant les premières ressources à utiliser et déterminées dans la cinquième étape.

L'invention sera mieux comprise à la lecture de la description de plusieurs formes de réalisation qui va suivre, donnée uniquement à titre d'exemple et faite en se référant aux dessins sur lesquels :
- la Figure 1 est une vue générale d'un éclaté des empreintes de couvertures cellulaires de différents niveaux d'un système intégré de radiocommunications selon l'invention à couverture cellulaire hiérarchique ordonnée, représenté en termes de diverses tailles de couvertures cellulaires possibles et de recouvrements possibles entre les couvertures, les tailles des cellules variant en fonction des types de systèmes formant le système intégré ;
- la Figure 2 est une vue partielle de l'architecture générale d'un système intégré selon l'invention dans laquelle le système intégré comprend un premier système et un deuxième système, le niveau de couverture du premier système étant supérieur au niveau de couverture du deuxième système, le premier système étant ici un système satellitaire et le deuxième système étant un système de radiocommunications cellulaire à macro-cellules ;
- les Figure 3A et 3B sont des vues générales de deux exemples de plan de fréquences des première et deuxième voie montantes utilisées respectivement par les premier et deuxième systèmes de l'invention indépendamment de l'existence d'une bande spécifique réservée exclusivement au premier système ;
- les Figures 4A et 4B sont des vues, moins générales que les vues des Figures 3A et 3B, de deux exemples de plan de fréquences des première et deuxième voie montantes, utilisées respectivement par les premier et deuxième systèmes de l'invention, dans lesquels une bande spécifique est réservée exclusivement au premier système ;
- la Figure 5 est une vue d'un exemple de système intégré selon l'invention, utilisant ici les architectures et les protocoles 4G ou 5G d'un réseau d'accès intégré, et comprenant ici une composante cellulaire et une composante terrestre macro-cellulaire comme premier et deuxième systèmes respectivement ;
- La Figure 6 est une vue panoramique du système intégré de la Figure 5 permettant d'identifier des scénarios d'environnement d'un terminal et les composantes de système associées permettant le meilleur acheminement d'un signal émis par le terminal dans le système intégré ;
- La Figure 7 est une vue du système intégré de la Figure 5 qui détaille l'architecture du satellite de la composante spatiale ;
- La Figure 8 est un premier mode de réalisation d'un procédé de radiocommunications cellulaire mis en oeuvre par un système intégré tel que décrit par l'une des Figures 1 à 2 et 5 à 7 ;
- La Figure 9 est un deuxième mode de réalisation d'un procédé de radiocommunications cellulaire mis en oeuvre par un système intégré tel que décrit par l'une des Figures 1 à 2 et 5 à 7.

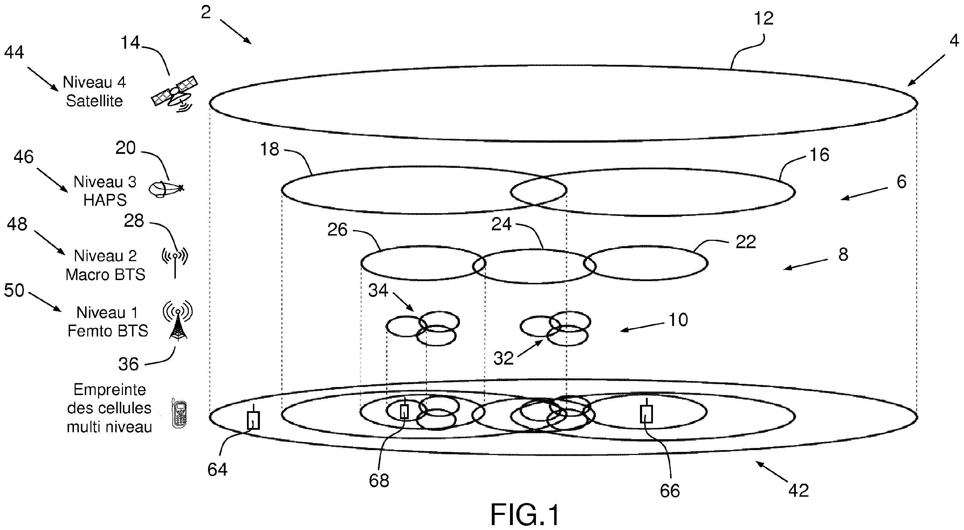

Suivant la Figure 1, un système intégré de radiocommunication 2 à couverture cellulaire hiérarchique ordonnée comprend plusieurs niveaux 4, 6, 8, 10 de couvertures cellulaires, désignés respectivement ici par « niveau 4 », « niveau 3 », « niveau 2 », « niveau 1 », en parcourant la Figure 1 de haut en bas.

Les niveaux de couvertures cellulaire sont ordonnés par un indice entier, ici allant ici de 1 à 4, qui croit en fonction de la taille des cellules du niveau.

Ici, la couverture 4 de niveau « 4 » comprend une cellule satellitaire 12 desservie par un satellite 14 formant partiellement une station relai de niveau « 4 ».

La couverture 6 de niveau « 3 » comprend ici deux cellules 16, 18 desservies par une ou deux station-plateformes 20 à altitude élevée HAPS (en anglais « High Altitude Platform Station), comme par exemple un ballon stratosphérique, la taille des cellules 16, 18 étant compatible du cône de visibilité de la station-plateforme 20 et une station-plateforme 20 formant partiellement une station relai de niveau « 3 ».

La couverture de niveau « 2 » comprend ici trois macro-cellules 22, 24, 26 desservies chacune par une station de base 28 BTS « Macro » (en anglais Macro Base Station) formant une station relai de niveau « 2 ».

La couverture de niveau « 1 » comprend ici deux amas 32, 34 formés chacun de trois micro-cellules, chaque micro-cellule étant desservie par une station de base 36 différente.

Suivant la Figure 1, la superposition des couvertures 4, 6, 8, 10 forme une couverture multi-niveaux 42 du système intégré 2 ou une empreinte au sol de cellules multi-niveaux.

Ici, la cellule 12 de la couverture 4 de niveau « 4 » recouvre les cellules HAPS 18 et 16 de la couverture 6 de niveau « 3 » comme une cellule parapluie. Les deux cellules HAPS 16, 18 de la couverture de 6 de niveau « 3 » recouvrent comme cellules parapluie les trois macro-cellules 22, 24, 26 de la couverture 8 de niveau « 2 ». Les trois macro-cellules 22, 24, 26 de la couverture 8 de niveau « 2 » recouvrent comme cellules parapluie les deux amas 32, 34 de trois micro-cellules cellules chacun de la couverture 10 de niveau « 1 ».

La cellule 12 de la couverture 4 de niveau « 4 » est réalisée et gérée par un système de radiocommunication satellite 44 comprenant et utilisant au moins un satellite géostationnaire GSO ou non géostationnaire (NGSO), ici le satellite 14.

Les deux cellules 16, 18 de la couverture 6 de niveau « 3 » sont réalisées et gérées par un système de radiocommunications HAPS 46 comprenant et utilisant au moins une station-plateforme à altitude élevée HAPS, ici le ballon stratosphérique 20.

Les trois macro-cellules 22, 24, 26 de la couverture 8 de niveau « 2 » sont réalisées et gérées par un système de radiocommunication cellulaire 48 comprenant et utilisant un réseau de stations de bases 36 servant de stations relais aux macro-cellules 22, 24, 26.

Les micro-cellules des deux amas 32, 34 sont réalisées et gérées par un système de radiocommunication cellulaire 50 comprenant et utilisant un réseau de stations de bases 36 servant de stations relais aux micro-cellules des deux amas 32, 34.

Suivant une première configuration, le système intégré 2 comprend un premier système de radiocommunications et un deuxième système de radiocommunications, le premier système étant le système de radiocommunication satellite 44 et le deuxième système comprend un ou plusieurs systèmes pris parmi les systèmes 46, 48, 50. Le premier niveau de couverture associé au premier système, ici « 4 » est supérieur à n'importe lequel des niveaux de couverture d'un système formant au moins en partie le deuxième système. Un deuxième niveau de couverture associé au deuxième système est défini comme étant le plus grand des niveaux de couvertures des systèmes formant le deuxième système de radiocommunications.

Suivant une deuxième configuration, le système intégré 2 comprend un premier système de radiocommunications et un deuxième système de radiocommunications, le premier système étant le système de radiocommunications HAPS 46 et le deuxième système comprend un ou plusieurs systèmes, pris parmi le système de radiocommunication macro-cellulaire 48 et le système de radiocommunication femto-cellulaire 50. Le premier niveau de couverture associé au premier système, ici « 3 », est supérieur à n'importe lequel des niveaux de couverture d'un système formant le deuxième système, et à un deuxième niveau de couverture, défini comme le plus grand des niveaux de couvertures du ou des systèmes 48, 50 formant le deuxième système de radiocommunications.

Suivant une troisième configuration, le système intégré 2 comprend un premier système de radiocommunications et un deuxième système de radiocommunications, le premier système étant le système de radiocommunication macro-cellulaire 48 et le deuxième système étant le système de radiocommunication micro-cellulaire 50. Le premier niveau de couverture associé au premier système, ici « 2 » est supérieur au deuxième niveau associé au deuxième système, ici « 1 ».

Suivant la Figure 1, le système intégré 2 comprend des terminaux bi-modes ou multi-modes, seuls trois de ces terminaux 64, 66, 68 étant représentés pour simplifier la Figure 1. Ici, un premier terminal 64 et un deuxième terminal 66 sont deux terminaux bi-modes, configurés pour utiliser sélectivement le système satellitaire 44 ou le système de radio-macro-cellulaire 48. Le premier terminal 64 est situé dans la cellule satellitaire 12 et en dehors des cellules de niveau de couverture inférieur ou égal à 3, tandis que le deuxième terminal 66 est situé dans la macro-cellule 22. Un troisième terminal 68 est par exemple un terminal quadri-mode configuré pour utiliser sélectivement l'un des quatre systèmes 44, 46, 48, 50 du système intégré 2 et situé dans l'amas 34 de micro-cellules.

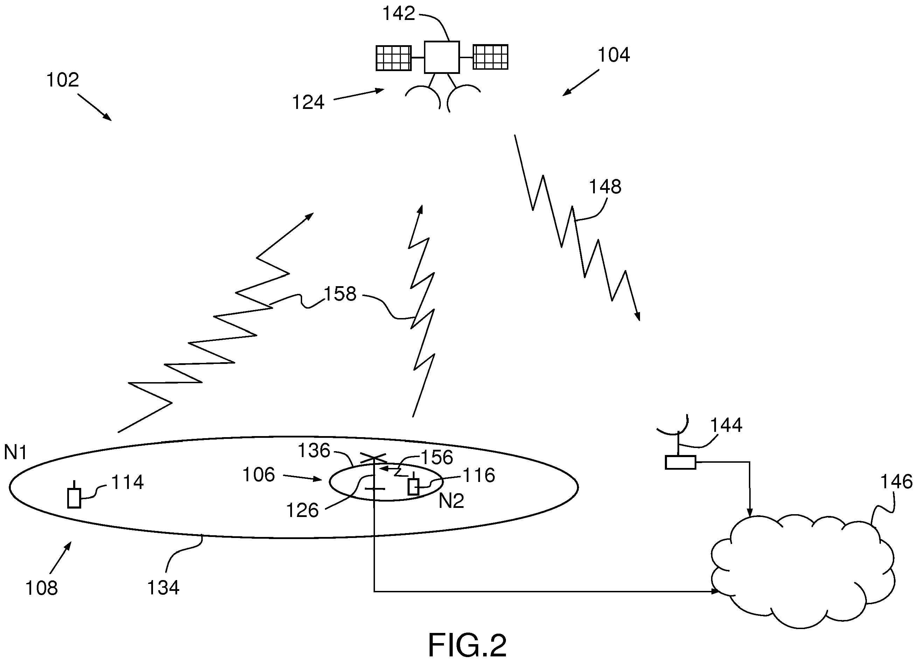

Suivant la Figure 2 et une vue partielle générique d'un système intégré 102 selon l'invention, dérivé du système 2 de la Figure 1, le système intégré 102 comprend de manière générale un premier système de radiocommunications 104, un deuxième système de radiocommunications 106, et un ensemble 108 de terminaux bi-modes 114, 116, configurés pour utiliser sélectivement le premier système 104 ou le deuxième système 106.

Le premier système 104 a un premier niveau de couverture, désigné par N1, et une première station relai 124. Le deuxième système 106 a un deuxième niveau de couverture, désigné par N2, et une deuxième station relai 126.

Sans limiter la généralité de l'invention et par souci de simplification de la Figure 2, une seule première cellule 134 du premier système 104 et une seule deuxième cellule du deuxième système 106 sont représentées, la deuxième cellule 136 étant incluse géographiquement dans la première cellule 134, et seuls un premier terminal 114 et un deuxième terminal 116 sont représentés, le premier terminal 114 étant situé dans la première cellule 134 et en dehors de la deuxième cellule 136, et le deuxième terminal 116 étant situé dans la deuxième cellule 136.

Cette représentation générale de la Figure 2 est illustrée par le cas particulier où le premier système 104 est un système satellitaire comme le système satellitaire 44 de la Figure 1, et où le deuxième système 106 est un système de radiocommunication macro-cellulaire comme le système de radiocommunication macro-cellulaire 48 de la Figure 1. Selon ce cas particulier, les première et deuxième cellules 134, 136 de la Figure 2 sont par exemple et respectivement la cellule satellitaire 12 et la macro-cellule 18 de la Figure 1, et les premier et deuxième terminaux 114, 116 de la Figure 2 sont par exemple et respectivement les premier et deuxième terminaux bi-modes 64, 66 du système intégré 2 de la Figure 1.

La première station relai 124 est de manière particulière la station relai d'une composante satellitaire, et elle comporte un satellite 142 et une station d'accès 144 au réseau fixe 146 de l'infrastructure terrestre. Le satellite 142 et la station d'accès 144 sont couplés entre eux par une liaison de diffusion aller 148.

Suivant la Figure 2, les premier et deuxième terminaux bi-modes 114, 116 sont configurés pour déterminer le système ou composante du système intégré, et la cellule du système auxquels se rattacher en observant les conditions de propagation et la qualité de réception de signaux de balises diffusées sur des voies retour, non représentées sur la Figure 2, en provenance des premier et deuxième stations relais 124 et 126.

Lorsqu'un terminal bi-mode reçoit la balise de la deuxième station relai126 de la deuxième cellule 136 du deuxième système 106, il sélectionne en priorité le deuxième système de communication et met en place une communication pour acheminer sur une deuxième voie montante 156 des données de trafic vers la deuxième station relai 116. Ici, le deuxième terminal 116, situé à une portée suffisante de la deuxième station relai 126, est rattaché au deuxième système 106 pour émettre sur la deuxième voie montante 156.

Lorsqu'un terminal bi-mode ne reçoit pas correctement la balise de la deuxième station relai 126 de la deuxième cellule 136 du deuxième système 106 mais reçoit avec une qualité suffisante la balise de la première station relai 124 de la première cellule 134 du premier système 104, il sélectionne le premier système de communication 104 et met en place une communication pour acheminer sur une première voie montante 158 des données de trafic vers la première station relai 124. Ici, le premier terminal 116, situé à une portée insuffisante de la deuxième station relai 126 mais situé dans la zone de couverture de la première cellule 134 du premier système 104 avec une portée suffisante, est rattaché au premier système 104 pour émettre sur la première voie montante 158.

De manière générale et suivant un premier mode de réalisation, le système intégré 102 selon l'invention est caractérisé en ce que le premier système 104 et le deuxième système 106 sont configurés pour partager de manière simultanée une portion commune Bc d'une première bande B1 de fréquences respectivement sur la première voie montante 158 et la deuxième voie montante 156, et gérer respectivement des premières ressources de transmission et des deuxièmes ressources de transmission correspondantes.

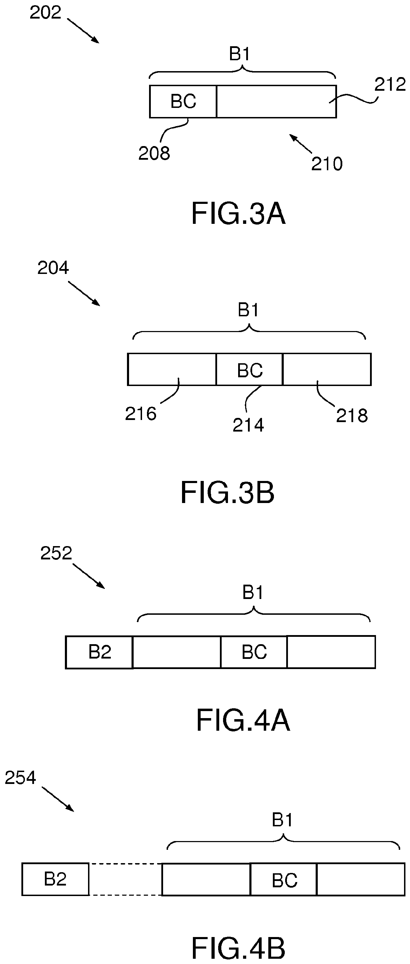

Suivant les Figures 3A à 3B, un premier exemple 202 et un deuxième exemple 204 de plan de fréquences des premier et deuxième systèmes 104, 106, pris ensemble, sont illustrés.

Dans le premier exemple de plan de fréquences 202, une portion commune Bc, désignée par la référence 208, de bande de fréquences partagée par les premier et deuxième systèmes, 104, 106, est incluse dans et située à une extrémité inférieure d'une première bande B1, désignée par la référence numérique 210. La bande restante d'un seul tenant et adjacente à droite sur la Figure 3A définit une bande 210 dédiée exclusivement au deuxième système 106.

Dans le deuxième exemple de plan de fréquences 204, la portion commune Bc, désignée par la référence 214, de bande de fréquences partagée par les premier et deuxième systèmes 104, 106, est incluse à l'intérieur de la première bande B1, et définit de part et d'autre deux bandes d'encadrement 216, 218, dédiées exclusivement au deuxième système 106. Il est à remarquer que les plans de fréquences 202, 204 illustrées sur les Figures 3A, 3B englobent les cas d'utilisation ou d'absence d'une deuxième bande de fréquences B2, différente de la première bande B1 et dédiée exclusivement au premier système 104.

Suivant la Figure 2 et de manière générale, le deuxième système de transmission 106 de niveau inférieur N2 est libre de gérer ses deuxièmes ressources de transmission sans contrainte de coordination vis-à-vis du premier système 104 de niveau supérieur N1.

En outre, le premier système 104 de niveau supérieur N1 est configuré pour ne pas perturber le deuxième système 106 dans la portion de bande de fréquences commune Bc.

Dans le système intégré 102, le premier système 104 est configuré pour transmettre des paquets de données sur un canal aléatoire à contention d'accès de première voie montante en utilisant des premières ressources partagées, caractérisées par des tranches de temps et/ou des tranches de fréquence et/ou des codes d'accès, et pour gérer les premières ressources partagée de manière optimale en termes de capacité de transmission du canal.

La gestion optimale des premières ressources partagées est mise en oeuvre :
.- en mesurant au niveau de la première station relai l'occupation des deuxièmes ressources radio actuellement utilisées par le deuxième système et des premières ressources partagées de la portion commune de la première bande actuellement utilisées par le premier système, puis
.- en déterminant, en fonction de la mesure de l'occupation des deuxièmes ressources radio actuellement utilisées par le deuxième système et des premières ressources actuellement utilisées par le premier système, les premières ressources en termes de tranches de temps et/ou des tranches de fréquence et/ou des codes d'accès à utiliser par de nouveaux terminaux bi-modes intéressés de façon à optimiser la capacité de transmission du canal aléatoire ; puis
.- en notifiant à l'aide d'un canal de signalisation diffusé sur la voie descendante aux terminaux bi-modes intéressés, non localisés dans la couverture cellulaire du deuxième système, les premières ressources à utiliser et déterminées précédemment.

Dans un premier cas, la mesure au niveau de la première station relai de l'occupation en énergie des deuxièmes ressources radio actuellement utilisées par le deuxième système et des premières ressources partagées de la portion commune Bc de la première bande B1 actuellement utilisées par le premier système est réalisée à l'aide d'un premier dispositif de mesure de l'occupation des deuxièmes ressources radio et des premières ressources toutes deux actuellement utilisées. Le dispositif de mesure de l'occupation est configuré pour déterminer l'énergie moyenne reçue dans une pluralité de canaux élémentaires de fréquence à partir d'une transformée à ondelettes ou une transformée de Fourier de l'énergie reçue d'un faisceau de couverture en réception de l'antenne de réception de la première station relai.

Dans un deuxième cas, et éventuellement en complément du premier cas, la mesure au niveau de la première station relai de l'occupation est réalisée à l'aide d'un deuxième dispositif de mesure de la distribution sur l'ensemble des codes d'accès et l'ensemble des tranches de l'énergie reçue d'un faisceau de réception de l'antenne de réception correspondant aux deuxièmes ressources radio actuellement utilisées par le deuxième système.

Dans un troisième cas, lorsque la première station relai est mobile par rapport aux terminaux bi-modes, la première station relai du premier système comporte un dispositif de mesure d'une répartition géographique de l'occupation spectrale reçue par un ou plusieurs faisceaux se recouvrant, déterminée à partir d'une pluralité de profils d'occupation spectrale mesurés à des instants différents le long de la trajectoire et d'un modèle prédictif de ladite trajectoire.

De manière préférée et suivant un deuxième mode de réalisation, dérivé du premier mode de réalisation, le premier système 104 est configuré pour gérer également des premières ressources supplémentaires qui utilisent une deuxième bande B2 de fréquences, différente de la première bande de fréquence B1 et réservée exclusivement à la première voie montante, et qui sont caractérisées par des tranches de temps et/ou des tranches de fréquence et/ou des codes d'accès.

Deux exemples 252, 254 de plans de fréquences utilisant une première et une deuxième bandes B1, B2 sont illustrées sur les Figures 4A et 4B. Dans l'exemple de la Figure 4B, les première et deuxième bandes B1 et B2 sont adjacentes tandis que dans l'exemple de la Figure 4B, les première et deuxième bandes B1, B2 sont séparées.

La gestion conjointe des premières ressources supplémentaires de la deuxième bande B2 et des premières ressources partagées de la portion commune Bc de la première bande B1 est optimale en termes de capacité maximale de transmission du canal aléatoire et de minimisation du taux de collision sur le canal aléatoire.

La gestion optimale et conjointe des premières ressources supplémentaires et des premières ressources partagées est mise en oeuvre :
.- en mesurant au niveau de la première station relai l'occupation en énergie des deuxièmes ressources radio actuellement utilisées par le deuxième système et des premières ressources partagées de la portion commune de la première bande, puis
.- en déterminant, en fonction de la mesure de l'occupation en énergie des deuxièmes ressources radio actuellement utilisées par le deuxième système et des premières ressources actuellement utilisées par le premier système, les premières ressources en termes de tranches de temps et/ou des tranches de fréquence et/ou des codes d'accès à utiliser par de nouveaux terminaux bi-modes intéressés de façon à optimiser la capacité de transmission du canal aléatoire et à minimiser le taux de collision sur le canal aléatoire; puis
.- en notifiant à l'aide d'un canal de diffusion voie retour aux terminaux bi-modes intéressés, non localisés dans la couverture cellulaire du deuxième système, les premières ressources à utiliser et déterminées précédemment.

Le premier système est configuré pour répartir les premières ressources partagées de la portion commune de la première bande et les premières ressources supplémentaires exclusivement réservées au premier système de façon à minimiser les collisions entre deux terminaux accédant au premier système via la première voie montante en utilisant la même première ressource de la première bande ou de la deuxième bande dans une cellule de couverture de premier niveau.

Suivant une première variante et en option, le premier système est également configuré pour répartir les premières ressources partagées de la portion commune de la première bande et les premières ressources supplémentaires exclusivement réservées au premier système, de façon à minimiser les collisions entre deux terminaux accédant pour l'un au premier système via la première voie montante et pour l'autre au deuxième système via la deuxième voie montante, et utilisant tous deux une même première ressource partagée de la portion commune de la première bande.

Suivant une deuxième variante et en option, le premier système est également configuré pour répartir les premières ressources partagées de la portion commune de la première bande et les premières ressources supplémentaires de la deuxième bande exclusivement réservées au premier système, de façon à minimiser les collisions non discriminables des paquets de données reçus sur la première voie montante, le procédé de discrimination étant compris dans l'ensemble formé par :
.- la technique générale de l'estimation conjointe à maximum de vraisemblance d'une séquence JMLSE (en anglais « Joint Maximum Likelyhood Sequence Estimator »),
.- la technique générale de l'annulation synchrone successive d'interférence SIC (en anglais « Successive Interference Cancellor synchrone »), qui sépare deux signaux en fonction d'une différence de puissance existant entre lesdits deux signaux,
.- la technique de l'annulation asynchrone successive d'interférence qui sépare deux signaux ayant le même rythme symbole en fonction d'un décalage temporel d'une fraction d'une période symbole existant entre lesdits signaux ;
.- les techniques JMSLE et SIC appliquées dans le cas où le protocole d'accès aléatoire à contention utilise un protocole ALOHA segmenté à diversité et résolution de contention CRDSA (en anglais « Contention Resolution Diversity Slotted ALOHA ») ;
.- la technique de séparation spatiale lorsque la station relai du premier système comporte une antenne à balayage électronique adaptatif, déterminé en fonction des caractéristiques des signaux reçus, ou à balayage déterministe, prédéterminé en fonction de critères incluant une date, une position géographique, et une direction privilégiée de l'antenne.

Suivant une troisième variante et en option, le premier système comprend un récepteur configuré pour mettre en oeuvre un traitement combiné des signaux en provenance de plusieurs cellules de couverture de premier niveau. En outre, le premier système est configuré pour répartir les premières ressources partagées de la portion commune de la première bande et les premières ressources supplémentaires de la deuxième bande exclusivement réservées au premier système, de façon à minimiser les collisions non discriminables des paquets de données reçus par le récepteur multifaisceaux, le procédé de discrimination étant fondé sur la différence de puissance reçue des signaux en provenance de différentes cellules de couverture de premier niveau, et compris dans l'ensemble formé par :
.- la technique générale de l'estimation conjointe à maximum de vraisemblance d'une séquence JMLSE,
.- la technique générale de l'annulation synchrone successive d'interférence SIC,
.- la technique de l'annulation asynchrone successive d'interférence,
.- les techniques JMSLE et SIC appliquées dans le cas où le protocole d'accès aléatoire à contention utilise un protocole ALOHA segmenté à diversité et résolution de contention CRDSA; et
   - la technique de séparation spatiale lorsque la station relai du premier système comporte une antenne à balayage électronique.

En complément de la troisième variante, le procédé de discrimination est fondé en outre sur la différence en temps, fréquence, puissance, direction d'arrivée du faisceau des signaux en provenance des signaux en provenance de différentes cellules de couverture de premier niveau.

Suivant une quatrième variante et en option, les premier et deuxième systèmes comprennent en commun un récepteur configuré pour mettre en oeuvre un traitement combiné des signaux en provenance d'une cellule de couverture de premier niveau et d'au moins une cellule de couverture de deuxième niveau. Le premier système est en outre configuré pour répartir les premières ressources partagées de la portion commune de la première bande et les premières ressources supplémentaires de la deuxième bande exclusivement réservées au premier système, de façon à minimiser les collisions non discriminables des paquets de données reçus par le récepteur multifaisceaux, le procédé de discrimination étant fondé sur la différence en temps, fréquence, puissance, direction d'arrivée du faisceau, des signaux en provenance de la cellule de couverture de premier niveau et de l'au moins une cellule de couverture de deuxième niveau, et compris dans l'ensemble formé par :
.- la technique générale de l'estimation conjointe à maximum de vraisemblance d'une séquence,
.- la technique générale de l'annulation synchrone successive d'interférence,
.- la technique de l'annulation asynchrone successive d'interférence,
.- les techniques JMSLE et SIC appliquées dans le cas où le protocole d'accès aléatoire à contention utilise un protocole ALOHA segmenté à diversité et résolution de contention CRDSA; et
   - la technique de séparation spatiale lorsque la station relai du premier système comporte une antenne à balayage électronique.

Dans ce qui suit, le système intégré tel que décrit dans les Figures 2, 3A à 3B, 4A à 4B, est un système intégré 302, configuré pour mettre en oeuvre les fonctionnalités d'un système cellulaire hétérogène de 5^{ème} génération combinant l'utilisation de stations de base desservant des cellules de type micro voire pico et femto Cell, de stations de base desservant des cellules de type Macro Cell, de stations plateformes à altitudes élevées HAPS et de systèmes satellitaires non géostationnaires ou géostationnaires. Les couvertures typiques d'un tel système sont celles décrites dans la Figure 1.

Dans ce qui suit, le système intégré 302 tire parti des évolutions d'architectures et de protocoles dans le réseau d'accès des systèmes cellulaires récemment développés ou en cours de développement à savoir les systèmes 5G de cinquième génération, voire les systèmes 4G de quatrième génération, et utilise la même terminologie.

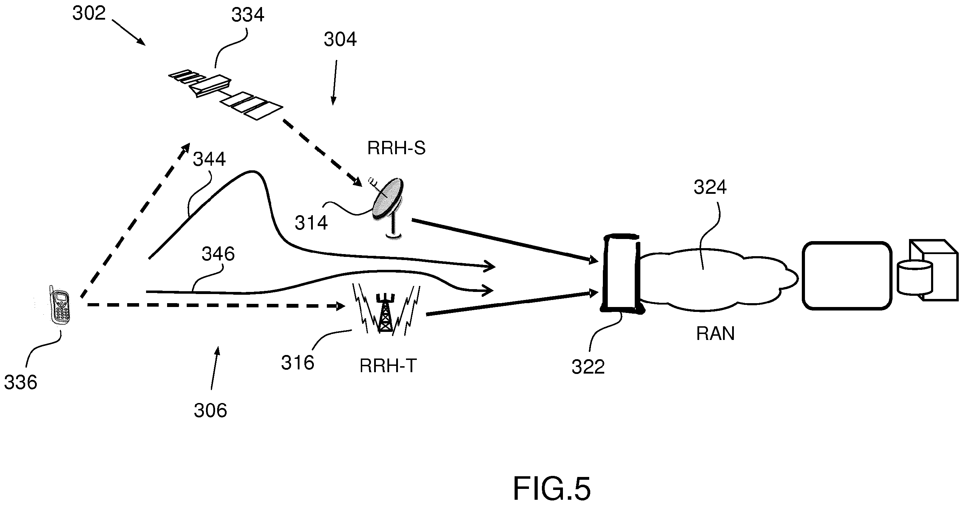

Suivant la Figure 5 illustrant partiellement un système intégré 302 suivant l'invention, seules une composante satellitaire 304 et une composante cellulaire terrestre 306 sont représentées.

Dans ces deux composantes 304, 306, l'architecture connue des stations de base, dénommées en anglais « Node B » et des contrôleurs de réseau d'accès radio RAN (en anglais « Radio Accès Radio ») est modifiée.

L'étage radio et le système d'antenne de chacune des stations de base sont désormais associés à des fonctions de conversion numérique dans une entité dénommée de manière générique tête radio distante RRH (en anglais « Remote Radio Head ») et plus spécifiquement RRH-S 314 pour la composante satellite 304 et RRH-T 316 pour une composante cellulaire terrestre 306.

Chaque tête radio distante RRH 314, 316, est raccordée aux fonctions modem, c'est-à-dire démodulation, décodage, codage, et modulation, regroupées au niveau d'une entité 322 de contrôle du réseau d'accès radio de Cloud 324, désigné par « Cloud » RAN ou C-RAN, capable de traiter les signaux de plusieurs RRH réparties sur une zone de couverture. Une telle architecture permet d'exploiter au maximum les techniques de diversité ou techniques MIMO (en anglais « Multiple Input Multiple Output) pour optimiser l'efficacité spectrale, la qualité de service QoS et la capacité du réseau En outre les C-RAN peuvent échanger entre elles des informations afin de combiner des signaux radiofréquences RF collectés par différentes tête radio distantes RRH adjacentes ou immédiatement proches mais situés à la frontière entre deux zones contrôlés par des C-RAN distinctes.

Le système intégré 302 est configuré pour fournir des services de communications bas débit unidirectionnels pour des applications de type communication entre machines avec des terminaux de très grande autonomie.

La composante spatiale ou le système satellitaire 304, considérée comme un premier système du système intégré, est configuré pour fonctionner dans les mêmes bandes de fréquence que les réseaux cellulaires, considérés comme des deuxièmes systèmes, par exemple en bande UHF, L, S ou C étendue, sans créer des interférences ou des brouillages sur le ou les réseaux cellulaires terrestres. Le système satellitaire 304 constitue une composante du système intégré 302 qui permet une extension de la couverture des réseaux ou systèmes cellulaires terrestres.

Le système satellitaire 304, basé ici sur des satellites 334 non stationnaires NGSO, est configuré pour recevoir les signaux transmis par les terminaux cellulaires 336 dans une zone donnée et de les retransmettre aux C-RAN dans le même format que celui utilisé par les RRH terrestres.

Typiquement, le système satellitaire est configuré au travers de ses satellites pour générer un ensemble de faisceaux dont l'empreinte constitue un ensemble de cellules spatiales ou satellitaire.

Les signaux transmis par tous les terminaux situés dans une cellule satellitaire sont donc collectés par un satellite 334 du système satellitaire et retransmis en diffusion vers l'ensemble des têtes radio distantes satellitaires RRH-S 314 répartis dans cette cellule satellitaire. Le C-RAN 322 ou les C-RAN rattachés aux RRH terrestres (RRH-T) 316 et aux RRH satellitaires (RRH-S) 314 de la cellule satellitaire sont configurés pour combiner les signaux collectés au travers des divers RRH terrestres ainsi que ceux collectés par satellite au travers de l'au moins une RRH satellitaire en tenant compte de la différence de délais entre deux chemins d'acheminement 344, 346 des signaux au C-RAN 322, un premier chemin 346 transitant par une RRH-T terrestre 316 et un deuxième chemin 344 transitant par une RRH-S satellitaire 314.

Dans une cellule satellitaire ayant une forte densité de têtes radio distantes terrestres RRH-T, la contribution ajoutée par la composante satellitaire est faible car le C-RAN dispose dans ce cas de nombreuses composantes terrestres via les RRH-T d'un signal transmis par un terminal cellulaire.

Dans une cellule satellitaire ayant une faible densité de têtes radio distantes terrestres RRH-T, par exemple dans une zone rurale, la composante satellitaire permet de compléter sans couture la couverture d'une ou plusieurs composantes cellulaires terrestres.

Dans une cellule satellitaire ne disposant d'aucune tête radio distante ni satellitaire ni terrestre, par exemple dans une zone isolée désertique ou maritime, la composante satellitaire est l'unique moyen de collecter les signaux transmis par les terminaux cellulaires. Elle sera relayée par une plusieurs liaisons inter-satellite ISL (en anglais Inter Satellite Link) jusqu'à une tête radio distante satellitaire RRH-S située dans une autre cellule satellitaire.

En variante, le système satellitaire est remplacé par un système HPAS basé sur des HAPS.

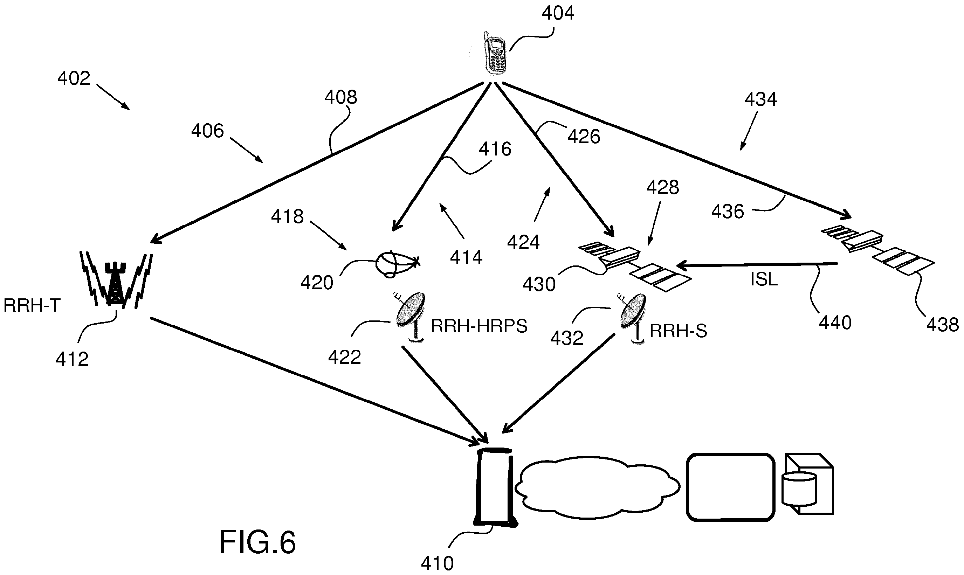

Suivant la Figure 6 et un panorama 402 d'identification, en fonction de l'environnement du terminal 404, des systèmes ou composantes du système intégré utilisées en tant que composante principale de transmission, quatre types d'environnements du terminal conduisent au choix d'une composante ou d'un système du système intégré.

Dans le cas 406 où le terminal 404 se trouve dans une zone ayant une forte densité de têtes radio distantes terrestres RRH-T, en particulier une zone urbaine, la voie montante de transmission 408 qui contribue de manière prépondérante à la bonne réception par le contrôleur C-RAN 410 est celle qui transite par une station de base ou tête radio distante terrestre 412.

Dans le cas 414 où le terminal 404 se trouve dans une zone dans laquelle a lieu un évènement particulier, par exemple une catastrophe naturelle qui a détruit l'infrastructure de télécommunication ordinaire dans la zone, la voie montante de transmission 416 qui contribue de manière prépondérante à la bonne réception par le contrôleur C-RAN 410 est celle, offerte par un système HAPS déployé pour cet événement, qui transite par une station relai HAPS 418, formé d'une plateforme HPAS 420 et d'une tête radio RRH 422 associée.

Dans le cas 424 où le terminal 404 se trouve dans une région, ayant majoritairement des zones rurales, la voie montante de transmission 426 qui contribue de manière prépondérante à la bonne réception par le contrôleur C-RAN 410 est celle, offerte par un système satellite, qui transite par une station relai satellite 428, formé d'un satellite 430 et d'une tête radio distante satellitaire RRH-S 432 associée.

Dans le cas 434 où le terminal 404 se trouve dans une zone isolée, par exemple un désert ou une zone maritime éloignée des côtes, la voie montante de transmission 436 qui contribue de manière prépondérante à la bonne réception par le contrôleur C-RAN 410 est celle, offerte par un système satellite, qui transite par au moins un premier satellite 438, une ou plusieurs liaisons inter-satellites ISL 440, et une deuxième station relai stellite, ici par commodité de représentation sur la Figure 6, la station relai satellite 428, formé du satellite 430 et de la tête radio distante satellitaire RRH-S 432 associée.

De manière générale, un terminal bi-mode cellulaire d'un système intégré 302 est configuré pour transmettre, entre autres signaux, un signal contenant des informations telles que l'identité du terminal ou de l'utilisateur du terminal, la position du terminal lorsque ce dernier est équipé d'un récepteur GNSS (en anglais « Global Navigation Satellite System »), et des rapports d'état et/ou de mesures du fonctionnement du capteur GNSS avec lequel le terminal est couplé.

Un terminal cellulaire bi-mode du système intégré 302 selon l'invention est configuré pour transmettre un signal selon trois manières.

Dans une première configuration, le terminal bi-mode est synchronisé sur une balise de signalisation fourni par l'un des réseaux cellulaire terrestre et peut émettre dans un canal d'accès aléatoire à contention qui lui a été indiqué par le réseau.

Dans une deuxième configuration, le réseau cellulaire terrestre a attribué au terminal une deuxième ressource radio de la bande dédiée exclusivement au réseau cellulaire terrestre ou une deuxième ressource radio de la portion de bande partagée. En reprenant la terminologie générale de l'invention, le réseau cellulaire terrestre considéré comme un deuxième système a attribué une deuxième ressource de la première bande B1 selon un mode DAMA (en anglais Demand Assigned Multiple Access).

Dans une troisième configuration, le terminal ne reçoit aucun signal d'un réseau cellulaire terrestre. Dans ce cas, le terminal est programmé pour émettre dans un canal à accès aléatoire du système satellite utilisant la portion de bande partagée de la première bande et/ou une deuxième bande dédiée exclusivement à la voie d'accès montante du système satellite. Comme techniques de transmission à accès aléatoire peuvent être utilisés des protocoles de type ALOHA segmenté (en anglais « Slotted ALOHA »), ALOHA segmenté avec résolution de contention par diversité ou CRDSA (en anglais « Contention Resolution Diversity Slotted ALOHA »), ou ALOHA à spectre étalé (en anglais « Spread Spectrum ALOHA ») en s'appuyant sur son horloge interne ou sur une horloge dérivée d'un récepteur GNSS. Les premières ressources du canal aléatoire peuvent être prescrites directement ou déterminables à partir d'informations diffusées sur une voie retour de la composante satellitaire.

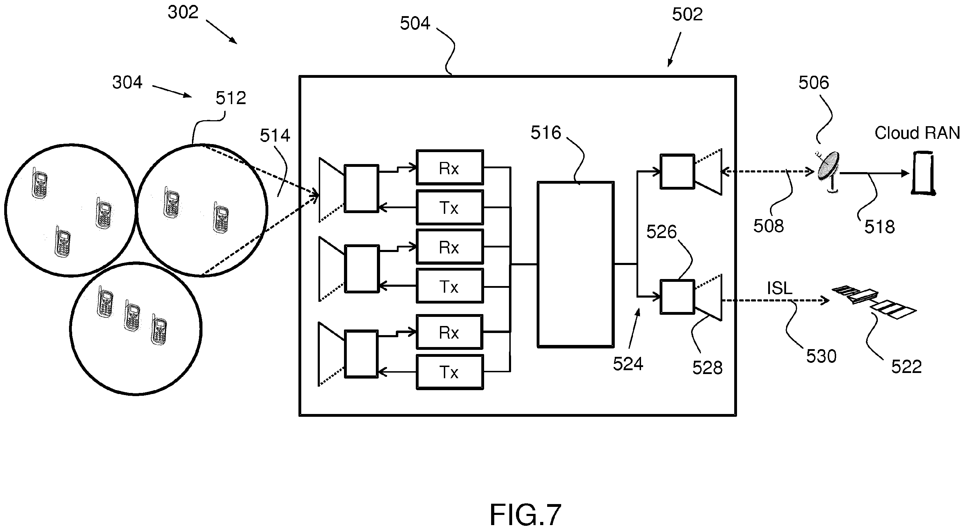

Suivant la Figure 7 et une architecture typique d'une station relai satellite 502 de la composante satellitaire 304 du système 302, la station relai satellite 502 comporte un satellite 504 et au moins une tête radio distante satellite RRH-S 506, connectée au satellite 504 au travers d'une liaison bidirectionnelle 508 d'accès au réseau de l'infrastructure terrestre.

La station relai satellite 502 est configurée pour numériser un agrégat de signaux provenant d'une même cellule satellitaire 512 et reçus dans un faisceau associé 514 de première voie montante du satellite 504 et générer un flux de données vers les C-RAN au même format que les RRH.

La numérisation peut se faire à bord du satellite 504 à l'aide d'un processeur numérique ou directement dans les têtes radio distante satellite RRH-S 506.

Le flux numérisé est mis à un format de radio numérisé sur fibre optique 518 D-RoF (en anglais « Digital Radio over Fiber) défini suivant des protocoles tels que CPRI (en anglais « Common Public Radio Interface ») ou OBSA (en anglais « Open Base Station Architecture Initiative »).

Le satellite 504 est configuré pour acheminer un agrégat de signaux provenant d'une même cellule satellitaire vers un autre satellite 522 au travers d'un canal transpondeur 524, connecté en sortie à un émetteur 526 et une antenne 528 de liaison inter-satellite 530, lorsque la cellule satellitaire est dépourvue de RRH comme par exemple dans le cas d'une couverture d'une zone maritime éloignée des côtes.

De manière générale les configurations suivantes du système intégré peuvent être réalisées :
.- un RRH-S est configuré pour recevoir des signaux transmis par plusieurs terminaux répartis dans une ou plusieurs cellules satellitaires, et collectées par un ou plusieurs satellites ;
.- un RRH-T est configuré pour collecter des signaux transmis par plusieurs terminaux réparties dans une cellule ;
.- un contrôleur C-RAN est configuré pour traiter des signaux de plusieurs RRH-T et RRH-S;
.- un RRH-T ou RRH-S est configuré pour être connecté à un ou plusieurs contrôleurs C-RAN.

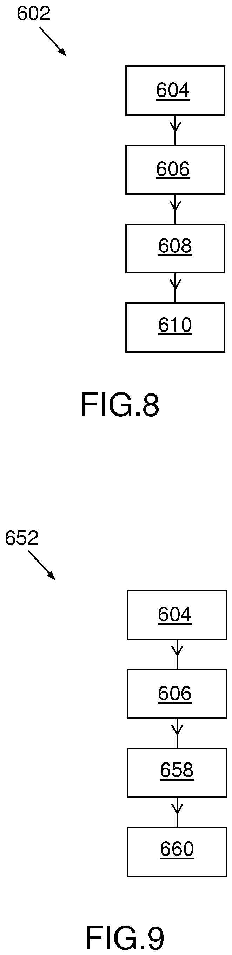

Suivant la Figure 8, un procédé de radiocommunication cellulaire 602 est mis en oeuvre par un système intégré de radiocommunication à couverture cellulaire hiérarchique ordonnée dans lequel une cellule de couverture de niveau supérieur couvre une ou plusieurs cellules de niveau inférieur.

Le système intégré de radiocommunication comprend :
.- un premier système de radiocommunications ayant un premier niveau de couverture et une première station relai et au moins un deuxième système de radiocommunications ayant un deuxième niveau de couverture et une deuxième station relai, le premier niveau de couverture étant supérieur au deuxième niveau de couverture ; et
.- un ensemble de terminaux bi-modes, configurés pour utiliser sélectivement le premier système ou le deuxième système ;
le premier système et le deuxième système étant configurés pour partager de manière simultanée une portion commune d'une bande de fréquences respectivement sur une première voie montante et une deuxième voie montante, et gérer respectivement des premières ressources de transmission et des deuxièmes ressources de transmission correspondantes;
Le deuxième système de transmission de niveau inférieur étant libre de gérer ses deuxièmes ressources de transmission sans contrainte de coordination vis-à-vis du premier système de niveau supérieur, et
Le premier système de niveau supérieur étant configuré pour ne pas perturber le deuxième système dans la portion de bande de fréquences commune.

Le procédé de radiocommunication 602 comprend un ensemble de première, deuxième, troisième et quatrième étapes 604, 606, 608 et 610.

Dans la première étape 604, un premier ensemble de terminaux bi-modes, connectés au premier système, transmettent des paquets de données sur un canal aléatoire à contention d'accès de première voie montante en utilisant des premières ressources de la portion partagée de la première bande. En parallèle, un deuxième ensemble de terminaux, connectés au deuxième système, utilisent des deuxièmes ressources de la portion partagée de la première bande.

Puis, dans la deuxième étape 606, le premier système mesure au niveau de la première station relai l'occupation des deuxièmes ressources radio actuellement utilisées par le deuxième système et des premières ressources radio actuellement utilisés par le premier système.

Ensuite, dans la troisième étape 608, en fonction de la mesure de l'occupation des deuxièmes ressources radio actuellement utilisées par le deuxième système et des premières ressources actuellement utilisées par le premier système, le premier système détermine les premières ressources en termes de tranches de temps et/ou des tranches de fréquence et/ou des codes d'accès à utiliser par de nouveaux terminaux bi-modes qui le souhaitent de façon à optimiser la capacité de transmission du canal aléatoire.

Puis, dans la quatrième étape 610, le premier système notifie à l'aide d'un canal de signalisation diffusé sur la voie descendante vers les terminaux bi-modes intéressés les informations pertinentes concernant les premières ressources à utiliser et déterminées dans la troisième étape 608.

Suivant la Figure 9 et un deuxième mode de réalisation de procédé, un procédé intégré de radiocommunication cellulaire 652, dérivé du procédé intégré de radiocommunication cellulaire 602, comporte les mêmes première et deuxième étapes 604, 606.

Le procédé intégré 652 diffère du procédé intégré 602 en ce que lors de sa mise en oeuvre, le premier système est configuré pour gérer des premières ressources supplémentaires utilisant une deuxième bande de fréquences réservée exclusivement à la première voie montante et les premières ressources partagées de portion commune de la première bande, caractérisées par des tranches de temps et/ou des tranches de fréquence et/ou des codes d'accès, de manière optimale en termes de capacité maximale de transmission du canal aléatoire et de minimisation du taux de collision sur le canal aléatoire.

Le procédé intégré 652 diffère également du procédé intégré 602 en ce que les troisième et quatrième étapes sont respectivement remplacées par des cinquième et sixième étapes 658, 660.

Dans la cinquième étape 658, en fonction de la mesure de l'occupation des deuxièmes ressources radio actuellement utilisées par le deuxième système et des premières ressources actuellement utilisées par le premier système, le premier système détermine les premières ressources en termes de tranches de temps et/ou des tranches de fréquence et/ou des codes d'accès à utiliser par de nouveaux terminaux bi-modes intéressés de façon à optimiser la capacité de transmission du canal aléatoire et à minimiser le taux de collision sur le canal aléatoire.

Dans la sixième étape 660, le premier système notifie à l'aide d'un canal de signalisation diffusé sur la voie descendante vers les terminaux bi-modes intéressés, non localisés dans la couverture cellulaire du deuxième système, les informations pertinentes concernant les premières ressources à utiliser et déterminées dans la cinquième étape 658.

Il est à remarquer qu'après l'une des étapes 610 en Figure 8, 660 en Figure 9, de notification aux terminaux bi-modes intéressés des informations pertinentes concernant les premières ressources à utiliser, les terminaux bi-modes pourront également sélectionner en fonction de leur position géographique des ressources de transmission parmi les premières ressources à utiliser notifiées et les utiliser.

Les systèmes intégrés 2, 102, 302 selon l'invention tels que décrits ci-dessus permettent ainsi de réaliser une extension de couverture sans couture et sans impact hardware sur les terminaux cellulaires.

De manière avantageuse, le système intégré selon l'invention est compatible de différents type de satellites ou HAPS en fonction des tailles des couvertures à traiter pour la collecte des signaux en provenance des terminaux cellulaires.

Ainsi, des satellites non géostationnaires NGSO, compris dans la gamme de satellites allant des nano-satellites aux mini-satellites en passant par les macro-satellites, peuvent être utilisés avec des cellules satellitaires défilantes au sol.

De même des plateformes de type HAPS, en particulier des ballons stratosphériques, peuvent être utilisées avec des cellules HAPS fixes au sol.

Dans le cas d'une constellation de satellites NGSO, il est possible de prévoir un déploiement progressif de la constellation. Dans un premier temps la zone d'extension de couverture sera limitée et intermittente.

Les premier et deuxième systèmes sont configurés pour acheminer des trafics sporadiques de données pour des applications de communication machine à machine.

## Revendications

1. Système intégré de radiocommunication à couverture cellulaire hiérarchique ordonnée dans lequel une cellule de couverture de niveau supérieur couvre une ou plusieurs cellules de niveau inférieur,
ledit système intégré comprenant
un premier système de radiocommunication (104 ; 304 ; 424) ayant un premier niveau de couverture N1 et une première station relai (124) et un deuxième système de radiocommunication (106 ; 306 ; 406) ayant un deuxième niveau de couverture N2 et une deuxième station relai (126), le premier niveau de couverture N1 étant supérieur au deuxième niveau de couverture N2; et
un ensemble de terminaux bi-modes (114, 116) configurés pour utiliser sélectivement le premier système (104 ; 304 ; 424) ou le deuxième système (106 ; 306 ; 406) ;
le premier système (104 ; 304 ; 424) et le deuxième système (106 ; 306 ; 406) sont configurés pour partager de manière simultanée une portion commune Bc d'une première bande B1 de fréquences respectivement sur une première voie montante (158) d'accès à la première station relai (124) et une deuxième voie montante (156) d'accès à la deuxième station relai (126), et gérer respectivement des premières ressources de transmission partagées et des deuxièmes ressources de transmission qui utilisent la portion commune Bc de la première bande B1 ;
Le deuxième système de transmission (106 ; 306 ; 406) de niveau inférieur N2 étant libre de gérer ses deuxièmes ressources de transmission sans contrainte de coordination vis-à-vis du premier système (104 ; 304 ; 424) de niveau supérieur N1, et
Le premier système (104 ; 304 ; 424) de niveau supérieur N1 étant configuré pour ne pas perturber le deuxième système (106 ; 306 ; 406) dans la portion commune Bc de bande de fréquences ;
le premier système (104 ; 304 ; 424) est configuré pour transmettre des paquets de données sur un canal aléatoire à contention d'accès de première voie montante et pour gérer ses premières ressources sur ledit canal aléatoire, **caractérisées par** des tranches de temps et/ou des tranches de fréquence et/ou des codes d'accès, de manière optimale en termes de capacité de transmission du canal aléatoire et de manière à ne pas perturber le deuxième système (106; 306; 406) dans la portion commune Bc de bande de fréquences,
en mesurant au niveau de la première station relai (124) l'occupation en ressources de transmission des deuxièmes ressources radio actuellement utilisées par le deuxième système (106 ; 306 ; 406) et des premières ressources partagées actuellement utilisées par le premier système, puis
en déterminant, en fonction de la mesure de l'occupation en deuxièmes ressources radio actuellement utilisées par le deuxième système (106 ; 306 ; 406) et des premières ressources partagées actuellement utilisées par le premier système (104 ; 304 ; 424), les premières ressources partagées, en termes de tranches de temps et/ou des tranches de fréquence et/ou des codes d'accès, à utiliser par de nouveaux terminaux bi-modes non localisés dans la couverture cellulaire du deuxième système (106 ; 306 ; 406), de façon à optimiser la capacité de transmission du canal aléatoire ; puis
en notifiant à l'aide d'un canal de signalisation diffusé sur une voie descendante aux terminaux bi-modes, non localisés dans la couverture cellulaire du deuxième système (106 ; 306 ; 406), les premières ressources à utiliser et déterminées précédemment.

2. Système intégré de radiocommunication à couverture cellulaire hiérarchique ordonnée selon la revendication 1,
dans lequel la première station relai (124) du premier système (104 ; 304 ; 424) comporte
un dispositif de mesure de l'occupation spectrale des deuxièmes ressources radio actuellement utilisées par le deuxième système, en déterminant l'énergie moyenne reçue dans une pluralité de canaux élémentaires de fréquence à partir d'une transformée à ondelettes ou une transformée de Fourier de l'énergie reçue d'un faisceau de couverture en réception de l'antenne de réception de la première station relai ; et/ou
un dispositif de mesure de la distribution sur l'ensemble des codes d'accès et l'ensemble des tranches de l'énergie reçue d'un faisceau de réception de l'antenne de réception correspondant aux deuxièmes ressources radio actuellement utilisées par le deuxième système.

3. Système intégré de radiocommunication à couverture cellulaire hiérarchique ordonnée selon l'une quelconque des revendications 1 à 2,
dans lequel, lorsque la première station relai (124) est mobile par rapport aux terminaux bi-modes (114, 116), la première station relai (124) du premier système (104 ; 304 ; 424) comporte
un dispositif de mesure d'une répartition géographique de l'occupation spectrale reçue par un ou plusieurs faisceaux de réception se recouvrant, déterminée à partir d'une pluralité de profils d'occupation spectrale mesurés à des instants différents le long de la trajectoire et d'un modèle prédictif de ladite trajectoire.

4. Système intégré de radiocommunication à couverture cellulaire hiérarchique ordonnée selon l'une quelconque des revendications 1 à 3, dans lequel
Le premier système (104 ; 304 ; 424) est configuré pour gérer des premières ressources supplémentaires utilisant une deuxième bande B2 de fréquences réservées exclusivement à la première voie montante (158) et les premières ressources partagées utilisant la portion commune Bc de la première bande B1, **caractérisées par** des tranches de temps et/ou des tranches de fréquence et/ou des codes d'accès, de manière optimale en termes de capacité maximale de transmission du canal aléatoire et de minimisation du taux de collision sur le canal aléatoire,
En mesurant au niveau de la première station relai (124) l'occupation des deuxièmes ressources radio actuellement utilisées par le deuxième système (106 ; 306 ; 406) et des premières ressources partagées actuellement utilisées par le premier système, puis
en déterminant, en fonction de la mesure de l'occupation des deuxièmes ressources radio actuellement utilisées par le deuxième système (106 ; 306 ; 406) et des premières ressources partagées actuellement utilisées par le premier système (104 ; 304 ; 424), les premières ressources en termes de tranches de temps et/ou des tranches de fréquence et/ou des codes d'accès à utiliser par de nouveaux terminaux bi-modes, non localisés dans la couverture cellulaire du deuxième système, de façon à optimiser la capacité de transmission du canal aléatoire et à minimiser le taux de collision sur le canal aléatoire; puis
en notifiant à l'aide du canal de signalisation diffusé sur la voie descendante vers les terminaux bi-modes, non localisés dans la couverture cellulaire du deuxième système, les premières ressources à utiliser et déterminées précédemment.

5. Système intégré de radiocommunication à couverture cellulaire hiérarchique ordonnée selon la revendication 4, dans lequel
le premier système (104 ; 304 ; 424) est configuré pour répartir les premières ressources partagées de la portion commune de la première bande et les premières ressources supplémentaires exclusivement réservées au premier système,
de façon à minimiser les collisions entre deux terminaux accédant au premier système via la première voie montante en utilisant la même première ressource de la première bande ou de la deuxième bande dans une cellule de couverture de premier niveau.

6. Système intégré de radiocommunication à couverture cellulaire hiérarchique ordonnée selon l'une quelconque des revendications 4 à 5, dans lequel
Le premier système (104 ; 304 ; 424) est configuré pour répartir les premières ressources partagées de la portion commune de la première bande et les premières ressources supplémentaires exclusivement réservées au premier système,
de façon à minimiser les collisions entre deux terminaux accédant pour l'un au premier système via la première voie montante et pour l'autre au deuxième système via la deuxième voie montante, et utilisant tous une même première ressource partagée de la portion commune de la première bande.

7. Système intégré de radiocommunication à couverture cellulaire hiérarchique ordonnée selon l'une quelconque des revendications 4 à 6, dans lequel
le premier système (104 ; 304 ; 424) est configuré pour répartir les premières ressources partagées de la portion commune de la première bande et les premières ressources supplémentaires de la deuxième bande exclusivement réservées au premier système,
de façon à minimiser les collisions non discriminables des paquets de données reçus sur la première voie montante, le procédé de discrimination étant compris dans l'ensemble formé par
.- la technique générale de l'estimation conjointe à maximum de vraisemblance d'une séquence, dite JMLSE,
.- la technique générale de l'annulation synchrone successive d'interférence, dite SIC, qui sépare deux signaux en fonction d'une différence de puissance existant entre lesdits deux signaux,
.- la technique de l'annulation asynchrone successive d'interférence qui sépare deux signaux ayant le même rythme symbole en fonction d'un décalage temporel d'une fraction d'une période symbole existant entre lesdits signaux ;
.- les techniques JMSLE et SIC appliquées dans le cas où le protocole d'accès aléatoire à contention utilise un protocole ALOHA segmenté à diversité et résolution de contention, dit CRDSA ;
.- la technique de séparation spatiale lorsque la station relai du premier système comporte une antenne à balayage électronique adaptatif, déterminé en fonction des caractéristiques des signaux reçus, ou à balayage déterministe, prédéterminé en fonction de critères incluant une date, une position géographique, et une direction privilégiée de l'antenne.

8. Système intégré de radiocommunication à couverture cellulaire hiérarchique ordonnée selon l'une quelconque des revendications 4 à 7, dans lequel
Le premier système (104; 304; 424) comprend un récepteur configuré pour mettre en oeuvre un traitement combiné des signaux en provenance de plusieurs cellules de couverture de premier niveau, et
Le premier système est configuré pour répartir les premières ressources partagées de la portion commune de la première bande et les premières ressources supplémentaires de la deuxième bande exclusivement réservées au premier système,
de façon à minimiser les collisions non discriminables des paquets de données reçus par le récepteur multifaisceaux, le procédé de discrimination étant fondé sur la différence de puissance reçue des signaux en provenance de différentes cellules de couverture de premier niveau, et compris dans l'ensemble formé par
la technique générale de l'estimation conjointe à maximum de vraisemblance d'une séquence, dite JMLSE,
.- la technique générale de l'annulation synchrone successive d'interférence, dite SiC,
.- la technique de l'annulation asynchrone successive d'interférence,
.- les techniques JMSLE et SIC appliquées dans le cas où le protocole d'accès aléatoire à contention utilise un protocole ALOHA segmenté à diversité et résolution de contention, dit CRDSA ; et
- la technique de séparation spatiale lorsque la station relai du premier système comporte une antenne à balayage électronique.

9. Système intégré de radiocommunication à couverture cellulaire hiérarchique ordonnée selon la revendication 8, dans lequel
Le procédé de discrimination est fondé en outre sur la différence en temps, fréquence, puissance, direction d'arrivée du faisceau des signaux en provenance des signaux en provenance de différentes cellules de couverture de premier niveau.

10. Système intégré de radiocommunication à couverture cellulaire hiérarchique ordonnée selon l'une quelconque des revendications 4 à 9, dans lequel
Les premier et deuxième systèmes (104, 106) comprennent en commun un récepteur configuré pour mettre en oeuvre un traitement combiné des signaux en provenance d'une cellule de couverture de premier niveau et d'au moins une cellule de couverture de deuxième niveau et
Le premier système (104) est configuré pour répartir les premières ressources partagées de la portion commune de la première bande et les premières ressources supplémentaires de la deuxième bande exclusivement réservées au premier système,
de façon à minimiser les collisions non discriminables des paquets de données reçus par le récepteur multifaisceaux, le procédé de discrimination étant fondé sur la différence en temps, fréquence, puissance, direction d'arrivée du faisceau, des signaux en provenance de la cellule de couverture de premier niveau et de l'au moins une cellule de couverture de deuxième niveau, et compris dans l'ensemble formé par
la technique générale de l'estimation conjointe à maximum de vraisemblance d'une séquence, dite JMLSE,
.- la technique générale de l'annulation synchrone successive d'interférence, dite SiC,
.- la technique de l'annulation asynchrone successive d'interférence,
.- les techniques JMSLE et SIC appliquées dans le cas où le protocole d'accès aléatoire à contention utilise un protocole ALOHA segmenté à diversité et résolution de contention, dit CRDSA ; et
- la technique de séparation spatiale lorsque la station relai du premier système comporte une antenne à balayage électronique.

11. Système intégré de radiocommunication à couverture cellulaire hiérarchique ordonnée selon l'une quelconque des revendications 1 à 10, dans lequel
Les premier et deuxième systèmes (104 ; 304 ; 404, 106 ; 306 ; 406) sont configurés pour acheminer des trafics sporadiques de données pour des applications de communication entre machines.

12. Système intégré de radiocommunication à couverture cellulaire hiérarchique ordonnée selon l'une quelconque des revendications 1 à 11, dans lequel
Le premier système (104; 304; 424) est un système de radiocommunication satellite comprenant et utilisant au moins un satellite géostationnaire, dit GSO, ou non géostationnaire, dit NGSO, et
Le deuxième système (106 ; 306 ; 406) est un système de radiocommunication comprenant un ou plusieurs réseaux de stations relais parmi les stations de plateformes à altitude élevée, dites HAPS, les stations de base desservant des macro-cellules, les stations de base desservant des micro, pico ou femto cellules ; ou
Le premier système (104) est un système de radiocommunication à altitude élevée comprenant et utilisant au moins stations de plateformes à altitude élevée, dites HAPS, et
Le deuxième système (106) est un système de radiocommunication cellulaire comprenant un ou plusieurs réseaux de stations relais parmi les stations de base desservant des macro-cellules, les stations de base desservant des micro, pico ou femto cellules ; ou
Le premier système (104) est un système de radiocommunication cellulaire comprenant un ou plusieurs réseaux de stations relais comprises parmi les stations de base desservant des macro-cellules, et
Le deuxième système (106) est un système de radiocommunication cellulaire comprenant un ou plusieurs réseaux de stations relais comprises parmi les stations de base desservant des micro, pico ou femto cellules.

13. Système intégré de radiocommunication à couverture cellulaire hiérarchique ordonnée selon l'une quelconque des revendications 1 à 11, dans lequel
Le premier système (104) est un système de radiocommunication satellitaire comprenant et utilisant une constellation de satellites défilant en orbites basses, dit LEO.

14. Système intégré de radiocommunication à couverture cellulaire hiérarchique ordonnée selon l'une quelconque des revendications 1 à 13, configuré pour mettre en oeuvre les fonctionnalités d'un système de radiocommunication hétérogène de 5^{ème} génération combinant l'utilisation de stations de base desservant cellules parmi les micro, pico et femto cellules, de stations de base desservant des cellules de type Macro Cell, de stations plateformes à altitudes élevées HAPS et de systèmes satellitaires non géostationnaires ou géostationnaires.

15. Procédé de radiocommunication cellulaire, mis en oeuvre par un système intégré de radiocommunication à couverture cellulaire hiérarchique ordonnée dans lequel une cellule de couverture de niveau supérieur couvre une ou plusieurs cellules de niveau inférieur,
Le système intégré (102) de radiocommunication comprenant :
.- un premier système de radiocommunication (104) ayant un premier niveau de couverture N1 et une première station relai (124) et un deuxième système de radiocommunication (106) ayant un deuxième niveau de couverture N2 et une deuxième station relai (126), le premier niveau de couverture N1 étant supérieur au deuxième niveau N2 de couverture ; et
.- un ensemble de terminaux bi-modes (114, 116), configurés pour utiliser sélectivement le premier système ou le deuxième système ;
le premier système (104) et le deuxième système (106) étant configurés pour partager de manière simultanée une portion commune Bc d'une première bande B1 de fréquences respectivement sur une première voie montante (158) d'accès à la première station relai (124) et une deuxième voie montante (156) d'accès à la deuxième station relai (126), et gérer respectivement des premières ressources de transmission partagées et des deuxièmes ressources de transmission qui utilisent la portion commune Bc de la première bande B1 ;
le deuxième système de radiocommunication (106) de niveau inférieur étant libre de gérer ses deuxièmes ressources de transmission sans contrainte de coordination vis-à-vis du premier système (104) de niveau supérieur, et
le premier système (104) de niveau supérieur N1 étant configuré pour ne pas perturber le deuxième système (106) dans la portion commune Bc de bande de fréquences ;
Ledit procédé de radiocommunication comprenant les étapes consistante en ce que dans une première étape (604), un premier ensemble de terminaux bi-modes connectés au premier système transmettent des paquets de données sur un canal aléatoire à contention d'accès de première voie montante en utilisant des premières ressources partagées de la portion commune Bc de la première bande, et un deuxième ensemble de terminaux, connectés au deuxième système, utilisent des deuxièmes ressources de la portion commune de la première bande B1; puis
dans une deuxième étape (606), le premier système (104) mesure au niveau de la première station relai l'occupation des deuxièmes ressources radio actuellement utilisées par le deuxième système et des premières ressources partagées actuellement utilisées par le premier système (104); ensuite
dans une troisième étape (608), en fonction de la mesure de l'occupation des deuxièmes ressources radio actuellement utilisées par le deuxième système (106) et des premières ressources partagées actuellement utilisées par le premier système, le premier système (104) détermine les premières ressources partagées, en termes de tranches de temps et/ou des tranches de fréquence et/ou des codes d'accès, à utiliser par de nouveaux terminaux bi-modes non localisés dans la couverture du deuxième système (106) de façon à optimiser la capacité de transmission du canal aléatoire et de manière à ne pas perturber le deuxième système (106; 306; 406) dans la portion commune Bc de bande de fréquences; puis dans une quatrième étape (610), le premier système (104) notifie à l'aide d'un canal de signalisation diffusé sur la voie descendante aux terminaux bi-modes, non localisés dans la couverture du deuxième système, les informations pertinentes concernant les premières ressources à utiliser et déterminées dans la troisième étape (608).

16. Procédé de radiocommunication cellulaire selon la revendication 15, dans lequel
le premier système (104) est configuré pour gérer des premières ressources supplémentaires utilisant une deuxième bande B2 de fréquences réservée exclusivement à la première voie montante et les premières ressources partagées utilisant la portion commune Bc de la première bande B1, **caractérisées par** des tranches de temps et/ou des tranches de fréquence et/ou des codes d'accès, de manière optimale en termes de capacité maximale de transmission du canal aléatoire et de minimisation du taux de collision sur le canal aléatoire, et
les troisième et quatrième étapes (608, 610) sont respectivement remplacées respectivement par des cinquième et sixième étapes (658, 660) consistant en ce que
dans la cinquième étape (658), en fonction de la mesure de l'occupation des deuxièmes ressources radio actuellement utilisées par le deuxième système et des premières ressources actuellement utilisées par le premier système, le premier système (104) détermine les premières ressources en termes de tranches de temps et/ou des tranches de fréquence et/ou des codes d'accès à utiliser par de nouveaux terminaux bi-modes, non localisés dans la couverture du deuxième système, de façon à optimiser la capacité de transmission du canal aléatoire et à minimiser le taux de collision sur le canal aléatoire; et
dans la sixième étape (660), le premier système (104) notifie à l'aide d'un canal de signalisation diffusé sur la voie descendante aux terminaux bi-modes, non localisés dans la couverture cellulaire du deuxième système, les informations pertinentes concernant les premières ressources à utiliser et déterminées dans la cinquième étape (658).

## Patentansprüche

1. Integriertes Funkkommunikationssystem mit geordneter, hierarchischer Mobilfunkabdeckung, bei welchem eine Abdeckungszelle höherer Ebene eine oder mehrere Zellen niedrigerer Ebene abdeckt,
wobei das integrierte System Folgendes beinhaltet:
ein erstes Funkkommunikationssystem (104; 304; 424), welches eine erste Abdeckungsebene N1 und eine erste Relaisstation (124) besitzt und ein zweites Funkkommunikationssystem (106; 306; 406), welches eine zweite Abdeckungsebene N2 und eine zweite Relaisstation (126) besitzt, wobei die erste Abdeckungsebene N1 höher ist als die Abdeckungsebene N2; und
eine Gruppe von Dualmode-Terminals (114, 116), welche konfiguriert sind, um selektiv das erste System (104; 304; 424) oder das zweite System (106; 306; 406) zu benutzen;
wobei das erste System (104; 304; 424) und das zweite System (106; 306; 406) konfiguriert sind, um gleichzeitig einen gemeinsamen Abschnitt Bc eines ersten Frequenzbandes B1 jeweils auf einem ersten Uplink (158) zum Zugang zur ersten Relaisstation (124) und auf einem zweiten Uplink (156) zum Zugang zur zweiten Relaisstation (126) zu teilen, und jeweils erste geteilte Übertragungsressourcen und zweite Übertragungsressourcen zu verwalten, welche den gemeinsamen Abschnitt Bc des ersten Bandes B1 nutzen;
wobei das zweite Übertragungssystem (106; 306; 406) niedrigerer Ebene N2 frei ist, seine zweiten Übertragungsressourcen ohne Koordinationsbeschränkung gegenüber dem ersten System (104; 304; 424) höherer Ebene N1 zu verwalten, und
das erste System (104; 304; 424) höherer Ebene N1 konfiguriert ist, um das zweite System (106; 306; 436) im gemeinsamen Abschnitt Bc des Frequenzbandes nicht zu stören;
wobei das erste System (104; 304; 424) konfiguriert ist, um Datenpakete auf einem Zufallskanal mit Zugriffskonkurrenz des ersten Uplinks zu übertragen und um seine ersten Ressourcen auf dem Zufallskanal, welche durch Zeitschlitze und/oder Frequenzschlitze und/oder Zugangscodes gekennzeichnet sind, und optimal in Bezug auf die Übertragungskapazität des Zufallskanals und in einer Weise zu verwalten, dass das zweite System (106; 306; 406) im gemeinsamen Abschnitt Bc des Frequenzbandes nicht gestört wird,
durch Messen, auf Höhe der ersten Relaisstation (124), der Belegung an Übertragungsressourcen der momentan durch das zweite System (106; 306; 406) benutzten zweiten Funkressourcen und der ersten geteilten Ressourcen, welche momentan durch das erste System benutzt werden, und anschließend
durch Bestimmen, angesichts der Messung der Belegung an momentan durch das zweite System (106; 306; 406) benutzten zweiten Funkressourcen und der ersten geteilten Ressourcen, welche momentan durch das erste System (104; 304; 424) benutzt werden, der ersten geteilten Ressourcen in Bezug auf Zeitschlitze und/oder Frequenzschlitze und/oder Zugangscodes, welche durch neue Dualmode-Terminals benutzt werden sollen, welche nicht innerhalb der Mobilfunkabdeckung des zweiten Systems (106; 306; 406) lokalisiert sind, um die Übertragungskapazität des Zufallskanals zu optimieren; und anschließend
durch Mitteilen, mit Hilfe eines Signalisierungskanals, welcher auf einem Downlink an die Dualmode-Terminals ausgestrahlt wird, welche nicht innerhalb der Mobilfunkabdeckung des zweiten Systems (106; 306; 406) lokalisiert sind, der zu benutzenden und zuvor festgelegten ersten Ressourcen.

2. Integriertes Funkkommunikationssystem mit geordneter, hierarchischer Mobilfunkabdeckung nach Anspruch 1,
bei welchem die erste Relaisstation (124) des ersten Systems (104; 304; 424) Folgendes beinhaltet:
eine Messvorrichtung der spektralen Belegung der momentan durch das zweite System benutzten zweiten Funkressourcen, durch Bestimmen der mittleren empfangenen Energie in einer Vielzahl von Elementar-Frequenzkanälen anhand einer Wavelet-Transformation oder einer Fourier-Transformation der empfangenen Energie eines Abdeckungsstrahls am Empfang der Empfangsantenne der ersten Relaisstation; und/oder eine Messvorrichtung der Verteilung über sämtliche Zugangscodes und sämtliche Schlitze der empfangenen Energie eines Empfangsstrahls der Empfangsantenne, welcher den momentan durch das zweite System benutzten zweiten Funkressourcen entspricht.

3. Integriertes Funkkommunikationssystem mit geordneter, hierarchischer Mobilfunkabdeckung nach einem der Ansprüche 1 bis 2,
bei welchem, wenn die erste Relaisstation (124) beweglich in Bezug auf die Dualmode-Terminals (114, 116) ist, die erste Relaisstation (124) des ersten Systems (134; 304; 424) Folgendes beinhaltet:
eine Vorrichtung zur Messung einer der geografischen Verteilung der von einem oder mehreren einander überlappenden Empfangsstrahlen empfangenen Spektralbelegung, welche anhand einer Vielzahl von Spektralbelegungsprofilen, welche zu unterschiedlichen Zeitpunkten entlang der Bahn gemessen werden, und anhand eines prädiktiven Modells der Bahn bestimmt wird.

4. Integriertes Funkkommunikationssystem mit geordneter, hierarchischer Mobilfunkabdeckung nach einem der Ansprüche 1 bis 3, bei welchem
das erste System (104; 304; 424) konfiguriert ist, um zusätzliche erste Ressourcen, welche ein zweites Band B2 von Frequenzen nutzen, welche ausschließlich dem ersten Uplink (158) vorbehalten sind und die ersten geteilten Ressourcen, welche den gemeinsamen Abschnitt Bc des ersten Bandes B1 nutzen, welche durch Zeitschlitze und/oder Frequenzschlitze und/oder Zugangscodes gekennzeichnet sind, in optimaler Weise in Bezug auf die maximale Übertragungskapazität des Zufallskanals und zur Minimierung der Kollisionsquote auf dem Zufallskanal zu verwalten,
durch Messen, auf Höhe der ersten Relaisstation (124), der Belegung der momentan durch das zweite System (106; 306; 406) benutzten zweiten Funkressourcen und der ersten geteilten Ressourcen, welche momentan durch das erste System benutzt werden, und anschließend
durch Bestimmen, angesichts der Messung der Belegung der momentan durch das zweite System (106; 306; 406) benutzten zweiten Funkressourcen und der ersten geteilten Ressourcen, welche momentan durch das erste System (104; 304; 424) benutzt werden, der ersten Ressourcen in Bezug auf Zeitschlitze und/oder Frequenzschlitze und/oder Zugangscodes, welche durch neue Dualmode-Terminals benutzt werden sollen, welche nicht innerhalb der Mobilfunkabdeckung des zweiten Systems lokalisiert sind, um die Übertragungskapazität des Zufallskanals zu optimieren und die Kollisionsrate auf dem Zufallskanal zu minimieren; und anschließend
durch Mitteilen, mit Hilfe des Signalisierungskanals, welcher auf dem Downlink an die Dualmode-Terminals ausgestrahlt wird, welche nicht innerhalb der Mobilfunkabdeckung des zweiten Systems lokalisiert sind, der zu benutzenden und zuvor festgelegten ersten Ressourcen.

5. Integriertes Funkkommunikationssystem mit geordneter, hierarchischer Mobilfunkabdeckung nach Anspruch 4, bei welchem
das erste System (104; 304; 424) konfiguriert ist, um die ersten geteilten Ressourcen des gemeinsamen Abschnittes des ersten Bandes und die ersten zusätzlichen Ressourcen, welche ausschließlich dem ersten System vorbehalten sind, zu verteilen,
um Kollisionen zwischen zwei Terminals zu minimieren, welche auf das erste System über den ersten Uplink zugreifen, indem sie die gleiche erste Ressource des ersten Bandes oder des zweiten Bandes in einer Abdeckungszelle der ersten Ebene benutzen.

6. Integriertes Funkkommunikationssystem mit geordneter, hierarchischer Mobilfunkabdeckung nach einem der Ansprüche 4 bis 5, bei welchem
das erste System (104; 304; 424) konfiguriert ist, um die ersten geteilten Ressourcen des gemeinsamen Abschnittes des ersten Bandes und die ersten zusätzlichen Ressourcen, welche ausschließlich dem ersten System vorbehalten sind, zu verteilen,
um Kollisionen zwischen zwei Terminals zu minimieren, von welchen einer auf das erste System über den ersten Uplink zugreift und der andere auf das zweite System über den zweiten Uplink zugreift, und welche alle eine gleiche geteilte Ressource des gemeinsamen Abschnittes des ersten Bandes benutzen.

7. Integriertes Funkkommunikationssystem mit geordneter, hierarchischer Mobilfunkabdeckung nach einem der Ansprüche 4 bis 6, bei welchem
das erste System (104; 304; 424) konfiguriert ist, um die ersten geteilten Ressourcen des gemeinsamen Abschnittes des ersten Bandes und die ersten zusätzlichen Ressourcen des zweiten Bandes, welche ausschließlich dem ersten System vorbehalten sind, zu verteilen,
um nicht unterscheidbare Kollisionen der auf dem ersten Uplink empfangenen Datenpakete zu minimieren, wobei das Unterscheidungsverfahren in einer Gruppe beinhaltet ist, gebildet aus
.- der allgemeinen Technik der gemeinsamen Schätzung mit maximaler Wahrscheinlichkeit einer Sequenz, genannt JMLSE,
.- der allgemeinen Technik der synchronen, sukzessiven Interferenzauslöschung, genannt SIC, welche zwei Signale angesichts einer bestehenden Leistungsdifferenz zwischen den beiden Signalen trennt,
.- der Technik der asynchronen, sukzessiven Interferenzauslöschung, welche zwei Signale mit gleichem Symbolrhythmus angesichts einer zwischen den Signalen vorhandenen zeitlichen Verschiebung eines Bruchteils einer Symbolperiode trennt;
.- den Techniken JMSLE und SIC, welche in dem Fall angewandt werden, in dem das Zufalls-Zugriffsprotokoll mit Zugriffskonkurrenz ein segmentiertes ALOHA-Protokoll mit Konkurrenzdiversität und -auflösung verwendet, genannt CRDSA;
.- der Technik der räumlichen Trennung, wenn die Relaisstation des ersten Systems eine Antenne mit adaptiver elektronischer Abtastung beinhaltet, welche angesichts der Merkmale der empfangenen Signale bestimmt wird, oder mit deterministischer Abtastung, welche angesichts von Kriterien vorbestimmt wird, welche ein Datum, eine geografische Position und eine bevorzugte Richtung der Antenne enthalten.

8. Integriertes Funkkommunikationssystem mit geordneter, hierarchischer Mobilfunkabdeckung nach einem der Ansprüche 4 bis 7, bei welchem
das erste System (104; 304; 424) einen Empfänger beinhaltet, welcher konfiguriert ist, um eine kombinierte Bearbeitung der von mehreren Abdeckungszellen der ersten Ebene stammenden Signale umzusetzen, und
das erste System konfiguriert ist, um die ersten geteilten Ressourcen des gemeinsamen Abschnittes des ersten Bandes und die ersten zusätzlichen Ressourcen des zweiten Bandes, welche ausschließlich dem ersten System vorbehalten sind, zu verteilen,
um nicht unterscheidbare Kollisionen der durch den ersten Mehrstrahl-Empfänger empfangenen Datenpakete zu minimieren, wobei das Unterscheidungsverfahren auf der Differenz der empfangenen Leistung der von unterschiedlichen Abdeckungszellen der ersten Ebene stammenden Signale beruht, und in einer Gruppe beinhaltet ist, gebildet aus
.- der allgemeinen Technik der gemeinsamen Schätzung mit maximaler Wahrscheinlichkeit einer Sequenz, genannt JMLSE,
.- der allgemeinen Technik der synchronen, sukzessiven Interferenzauslöschung, genannt SIC,
.- der Technik der asynchronen, sukzessiven Interferenzauslöschung,
.- den Techniken JMSLE und SIC, welche in dem Fall angewandt werden, in dem das Zufalls-Zugriffsprotokoll mit Zugriffskonkurrenz ein segmentiertes ALOHA-Protokoll mit Konkurrenzdiversität und -auflösung verwendet, genannt CRDSA; und
.- der Technik der räumlichen Trennung, wenn die Relaisstation des ersten Systems eine Antenne mit elektronischer Abtastung beinhaltet.

9. Integriertes Funkkommunikationssystem mit geordneter, hierarchischer Mobilfunkabdeckung nach Anspruch 8, bei welchem
das Unterscheidungsverfahren zudem auf der Differenz in Bezug auf Zeit, Frequenz, Leistung und Eingangsrichtung des Strahls der von den Signalen stammenden Signale, welche von unterschiedlichen Abdeckungszellen der ersten Ebene stammen, beruht.

10. Integriertes Funkkommunikationssystem mit geordneter, hierarchischer Mobilfunkabdeckung nach einem der Ansprüche 4 bis 9, bei welchem
das erste und das zweite System (104, 106) gemeinsam einen Empfänger beinhalten, welcher konfiguriert ist, um eine kombinierte Bearbeitung der von einer Abdeckungszelle der ersten Ebene und von mindestens einer Abdeckungszelle der zweiten Ebene stammenden Signale umzusetzen und
das erste System (104) konfiguriert ist, um die ersten geteilten Ressourcen des gemeinsamen Abschnittes des ersten Bandes und die ersten zusätzlichen Ressourcen des zweiten Bandes, welche ausschließlich dem ersten System vorbehalten sind, zu verteilen,
um nicht unterscheidbare Kollisionen der durch den ersten Mehrstrahl-Empfänger empfangenen Datenpakete zu minimieren, wobei das Unterscheidungsverfahren auf der Differenz in Bezug auf Zeit, Frequenz, Leistung und Eingangsrichtung des Strahls der von der Abdeckungszelle der ersten Ebene und von der mindestens einen Abdeckungszelle der zweiten Ebene stammenden Signale beruht, und in einer Gruppe beinhaltet ist, gebildet aus
.- der allgemeinen Technik der gemeinsamen Schätzung mit maximaler Wahrscheinlichkeit einer Sequenz, genannt JMLSE,
.- der allgemeinen Technik der synchronen, sukzessiven Interferenzauslöschung, genannt SIC,
.- der Technik der asynchronen, sukzessiven Interferenzauslöschung,
.- den Techniken JMSLE und SIC, welche in dem Fall angewandt werden, in dem das Zufalls-Zugriffsprotokoll mit Zugriffskonkurrenz ein segmentiertes ALOHA-Protokoll mit Konkurrenzdiversität und -auflösung verwendet, genannt CRDSA; und
.- der Technik der räumlichen Trennung, wenn die Relaisstation des ersten Systems eine Antenne mit elektronischer Abtastung beinhaltet.

11. Integriertes Funkkommunikationssystem mit geordneter, hierarchischer Mobilfunkabdeckung nach einem der Ansprüche 1 bis 10, bei welchem
das erste und das zweite System (104; 304; 404, 106; 306; 406) konfiguriert sind, um sporadische Verkehre von Daten für Kommunikationsanwendungen zwischen Maschinen zu befördern.

12. Integriertes Funkkommunikationssystem mit geordneter, hierarchischer Mobilfunkabdeckung nach einem der Ansprüche 1 bis 11, bei welchem
das erste System (104; 304; 424) ein Satelliten-Funkkommunikationssystem ist, welches mindestens einen geostationären Satelliten, genannt GSO, oder einen nicht geostationären Satelliten, genannt NGSO, beinhaltet und benutzt, und
das zweite System (106; 306; 406) ein Funkkommunikationssystem ist, welches ein oder mehrere Netze von Relaisstationen aus der Gruppe der Stationen von Plattformen in großer Höhe beinhaltet, genannt HAPS,
wobei die Basis-Stationen Makro-Zellen bedienen, wobei die Basis-Stationen Mikro-, Pico- oder Femto-Zellen bedienen; oder
das erste System (104) ein Funkkommunikationssystem in großer Höhe ist, welches mindestens Stationen von Plattformen in großer Höhe beinhaltet und benutzt, genannt HAPS, und
das zweite System (106) ein Mobilfunkkommunikationssystem ist, welches ein oder mehrere Netze von Relaisstationen unter denjenigen Basis-Stationen beinhaltet, welche Makro-Zellen bedienen, unter Basis-Stationen, welche Mikro-, Pico- oder Femto-Zellen bedienen; oder
das erste System (104) ein Mobilfunkkommunikationssystem ist, welches ein oder mehrere Netze von Relaisstationen beinhaltet, welche in der Gruppe der Basis-Stationen beinhaltet sind, welche Makro-Zellen bedienen, und
das zweite System (106) ein Mobilfunkkommunikationssystem ist, welches ein oder mehrere Netze von Relaisstationen beinhaltet, welche in der Gruppe der Basis-Stationen beinhaltet sind, welche Mikro-, Pico- oder Femto-Zellen bedienen.

13. Integriertes Funkkommunikationssystem mit geordneter, hierarchischer Mobilfunkabdeckung nach einem der Ansprüche 1 bis 11, bei welchem
das erste System ein (104) Satelliten-Funkkommunikationssystem ist, welches eine Konstellation von Satelliten, welche sich in niedrigen Umlaufbahnen bewegen, genannt LEO, beinhaltet und benutzt.

14. Integriertes Funkkommunikationssystem mit geordneter, hierarchischer Mobilfunkabdeckung nach einem der Ansprüche 1 bis 13,
welches konfiguriert ist, um die Funktionen eines heterogenen Funkkommunikationssystems der 5. Generation umzusetzen, welches die Benutzung von Basis-Stationen, welche Zellen aus der Gruppe, bestehend aus Micro-, Pico- und Femto-Zellen bedienen, von Basis-Stationen, welche Zellen vom Typ Macro Cell bedienen, von Stationen von Plattformen in großen Höhen, genannt HAPS, und von nicht geostationären oder geostationären Satellitensystemen kombiniert.

15. Mobilfunkkommunikationsverfahren, welches umgesetzt wird durch ein integriertes Funkkommunikationssystem mit geordneter, hierarchischer Mobilfunkabdeckung, bei welchem eine Abdeckungszelle höherer Ebene eine oder mehrere Zellen niedrigerer Ebene abdeckt,
wobei das integrierte Funkkommunikationssystem (102) Folgendes beinhaltet:
.- ein erstes Funkkommunikationssystem (104), welches eine erste Abdeckungsebene N1 und eine erste Relaisstation (124) besitzt und ein zweites Funkkommunikationssystem (106), welches eine zweite Abdeckungsebene N2 und eine zweite Relaisstation (126) besitzt, wobei die erste Abdeckungsebene N1 höher ist als die Abdeckungsebene N2; und
.- eine Gruppe von Dualmode-Terminals (114, 116), welche konfiguriert sind, um selektiv das erste System oder das zweite System zu benutzen;
wobei das erste System (104) und das zweite System (106) konfiguriert sind, um gleichzeitig einen gemeinsamen Abschnitt Bc eines ersten Frequenzbandes B1 jeweils auf einem ersten Uplink (158) zum Zugang zur ersten Relaisstation (124) und einem zweiten Uplink (156) zum Zugang zur zweiten Relaisstation (126) zu teilen, und jeweils erste geteilte Übertragungsressourcen und zweite Übertragungsressourcen zu verwalten, welche den gemeinsamen Abschnitt Bc des ersten Bandes B1 nutzen;
wobei das zweite Funkkommunikationssystem (106) niedrigerer Ebene frei ist, seine zweiten Übertragungsressourcen ohne Koordinationsbeschränkung gegenüber dem ersten System (104) höherer Ebene zu verwalten, und
das erste System (104) höherer Ebene N1 konfiguriert ist, um das zweite System (106) im gemeinsamen Abschnitt Bc des Frequenzbandes nicht zu stören;
wobei das Funkkommunikationsverfahren die Schritte beinhaltet, die darin bestehen, dass;
in einem ersten Schritt (604) eine erste Gruppe von Dualmode-Terminals, welche mit dem ersten System verbunden sind, Datenpakete auf einem Zufallskanal mit Zugriffskonkurrenz des ersten Uplinks übertragen, indem sie erste geteilte Ressourcen des gemeinsamen Abschnittes Bc des ersten Bandes benutzen, und eine zweite Gruppe von Terminals, welche mit dem zweiten System verbunden sind, zweite Ressourcen des gemeinsamen Abschnittes des ersten Bandes B1 benutzten; und anschließend
in einem zweiten Schritt (606) das erste System (104) auf Höhe der ersten Relaisstation die Belegung der zweiten Funkressourcen misst, welche momentan durch das zweite System benutzt werden und der ersten geteilten Ressourcen, welche momentan durch das erste System benutzt werden (104); und danach
in einem dritten Schritt (608), angesichts der Messung der Belegung der momentan durch das zweite System (106) benutzten zweiten Funkressourcen und der ersten geteilten Ressourcen, welche momentan durch das erste System (104) benutzt werden, das erste System (104) die ersten geteilten Ressourcen in Bezug auf Zeitschlitze und/oder Frequenzschlitze und/oder Zugangscodes bestimmt, welche durch neue Dualmode-Terminals benutzt werden sollen, welche nicht innerhalb der Abdeckung des zweiten Systems (106) lokalisiert sind, um die Übertragungskapazität des Zufallskanals zu optimieren und zweite System (106; 306; 436) im gemeinsamen Abschnitt Bc des Frequenzbandes nicht zu stören; und anschließend
in einem vierten Schritt (610) das erste System (104) mit Hilfe eines Signalisierungskanals, welcher auf dem Downlink an die Dualmode-Terminals ausgestrahlt wird, welche nicht innerhalb der Abdeckung des zweiten Systems lokalisiert sind, die stichhaltigen Informationen bezüglich der ersten zu benutzenden und im dritten Schritt (608) bestimmten Ressourcen mitteilt.

16. Mobilfunkkommunikationsverfahren nach Anspruch 15, bei welchem
das erste System (104) konfiguriert ist, um zusätzliche erste Ressourcen, welche ein zweites Band B2 von Frequenzen nutzen, welches ausschließlich dem ersten Uplink vorbehalten ist und die ersten geteilten Ressourcen, welche den gemeinsamen Abschnitt Bc des ersten Bandes B1 nutzen, **gekennzeichnet durch** Zeitschlitze und/oder Frequenzschlitze und/oder Zugangscodes, in optimaler Weise in Bezug auf die maximale Übertragungskapazität des Zufallskanals und zur Minimierung der Kollisionsquote auf dem Zufallskanal zu verwalten, und
der dritte und der vierte Schritt (608, 610) jeweils durch einen fünften und einen sechsten Schritt (658, 660) ersetzt werden, die darin bestehen, dass
im fünften Schritt (658), angesichts der Messung der Belegung der momentan durch das zweite System benutzten zweiten Funkressourcen und der ersten Ressourcen, welche momentan durch das erste System benutzt werden, das erste System (104) die ersten Ressourcen in Bezug auf Zeitschlitze und/oder Frequenzschlitze und/oder Zugangscodes bestimmt, welche durch neue Dualmode-Terminals benutzt werden sollen, welche nicht innerhalb der Abdeckung des zweiten Systems lokalisiert sind, um die Übertragungskapazität des Zufallskanals zu optimieren und die Kollisionsrate auf dem Zufallskanal zu minimieren; und
in einem sechsten Schritt (660) das erste System (104) mit Hilfe eines Signalisierungskanals, welcher auf dem Downlink an die Dualmode-Terminals ausgestrahlt wird, welche nicht innerhalb der Mobilfunkabdeckung des zweiten Systems lokalisiert sind, die stichhaltigen Informationen bezüglich der ersten zu benutzenden und im fünften Schritt (658) bestimmten Ressourcen mitteilt.

## Claims

1. Integrated radio communication system with ordered hierarchical cellular coverage in which a cell of higher level coverage covers one or more cells of lower level,
said integrated system comprising
a first radio communication system (104; 304; 424) having a first coverage level N1 and a first relay station (124) and a second radio communication system (106; 306; 406) having a second coverage level N2 and a second relay station (126), the first coverage level N1 being higher than the second coverage level N2; and
a set of dual-mode terminals (114, 116) configured to selectively use the first system (104; 304; 424) or the second system (106; 306; 406);
the first system (104; 304; 424) and the second system (106; 306; 406) being configured to simultaneously share a common portion Bc of a first frequency band B1 respectively on a first uplink (158) for access to the first relay station (124) and a second uplink (156) for access to the second relay station (126), and respectively manage first shared transmission resources and second transmission resources which use the common portion Bc of the first band B1;
the second transmission system (106; 306; 406) of lower level N2 being free to manage its second transmission resources without any coordination constraint with respect to the first system (104; 304; 424) of higher level N1, and
the first system (104; 304; 424) of higher level N1 being configured to not disturb the second system (106; 306; 406) in the common frequency band portion Bc;
the first system (104; 304; 424) being configured to transmit data packets on a first uplink random access contention channel and to manage its first resources on said random channel, **characterized by** time slots and/or frequency slots and/or access codes, optimally in terms of transmission capacity of the random channel, and so as to not disturb the second system (106; 306; 406) in the common frequency band portion Bc,
by measuring, at the first relay station (124), the transmission resource occupancy of the second radio resources currently used by the second system (106; 306; 406) and of the first shared resources currently used by the first system, then
by determining, as a function of the measurement of the occupancy of the second radio resources currently used by the second system (106; 306; 406) and of the first shared resources currently used by the first system (104; 304; 424), the shared first resources, in terms of time slots and/or frequency slots and/or access codes, to be used by new dual-mode terminals not located in the cellular coverage of the second system (106; 306; 406), so as to optimize the transmission capacity of the random channel; then
by notifying, using a signalling channel broadcast on a downlink to the dual-mode terminals, not located in the cellular coverage of the second system (106; 306; 406), the first resources to be used and determined previously.

2. Integrated radio communication system with ordered hierarchical cellular coverage according to claim 1,
in which the first relay station (124) of the first system (104; 304; 424) comprises a device for measuring the spectral occupancy of the second radio resources currently used by the second system, by determining the average energy received in a plurality of basic frequency channels from a wavelet transform or a Fourier transform of the energy received from a beam of reception-mode coverage of the receiving antenna of the first relay station; and/or
a device for measuring the distribution, over all the access codes and all the slots, of the energy received from a reception beam of the receiving antenna corresponding to the second radio resources currently used by the second system.

3. Integrated radio communication system with ordered hierarchical cellular coverage according to any one of claims 1 to 2,
in which, when the first relay station (124) is mobile relative to the dual-mode terminals (114, 116), the first relay station (124) of the first system (104; 304; 424) comprises
a device for measuring a geographical distribution of the spectral occupancy received by one or more overlapping reception beams, determined from a plurality of spectral occupancy profiles measured at different instants along the trajectory and from a predictive model of said trajectory.

4. Integrated radio communication system with ordered hierarchical cellular coverage according to any one of claims 1 to 3, in which
the first system (104; 304; 424) is configured to manage first additional resources using a second band B2 of frequencies reserved exclusively for the first uplink (158) and the first shared resources using the common portion Bc of the first band B1, **characterized by** time slots and/or frequency slots and/or access codes, optimally in terms of maximum transmission capacity of the random channel and of minimization of the rate of collision on the random channel,
by measuring, at the first relay station (124), the occupancy of the second radio resources currently used by the second system (106; 306; 406) and of the first shared resources currently used by the first system, then
by determining, as a function of the measurement of the occupancy of the second radio resources currently used by the second system (106; 306; 406) and of the first shared resources currently used by the first system (104; 304; 424), the first resources in terms of time slots and/or frequency slots and/or access codes to be used by new dual-mode terminals, not located in the cellular coverage of the second system, so as to optimize the transmission capacity of the random channel and to minimize the rate of collision on the random channel; then
by notifying using the signalling channel broadcast on the downlink to the dual-mode terminals, not located in the cellular coverage of the second system, the first resources to be used and determined previously.

5. Integrated radio communication system with ordered hierarchical cellular coverage according to claim 4, in which
the first system (104; 304; 424) is configured to distribute the first shared resources of the common portion of the first band and the first additional resources exclusively reserved for the first system,
so as to minimize the collisions between two terminals accessing the first system via the first uplink by using the same first resource of the first band or of the second band in a cell of first level coverage.

6. Integrated radio communication system with ordered hierarchical cellular coverage according to any one of claims 4 to 5, in which
the first system (104; 304; 424) is configured to distribute the first shared resources of the common portion of the first band and the first additional resources exclusively reserved for the first system,
so as to minimize the collisions between two terminals accessing, for one of them, the first system via the first uplink and, for the other one, the second system via the second uplink, and all using the same first shared resource of the common portion of the first band.

7. Integrated radio communication system with ordered hierarchical cellular coverage according to any one of claims 4 to 6, in which
the first system (104; 304; 424) is configured to distribute the first shared resources of the common portion of the first band and the first additional resources of the second band exclusively reserved for the first system,
so as to minimize the indiscriminate collisions of the data packets received on the first uplink, the discrimination method being included in the set formed by
- the general joint maximum likelihood sequence estimation (JMLSE) technique,
- the general synchronous successive interference cancellation (SIC) technique which separates two signals as a function of a power difference existing between said two signals,
- the asynchronous successive interference cancellation technique which separates two signals having the same symbol rate as a function of a time offset by a fraction of a symbol period existing between said signals;
- the JMSLE and SIC techniques applied in the case where the contention-based random access protocol uses a contention resolution diversity slotted ALOHA (CRDSA) protocol;
- the spatial separation technique when the relay station of the first system comprises an antenna with adaptive electronic scan, determined as a function of the characteristics of the signals received, or with deterministic scan, predetermined as a function of criteria including a date, a geographical position, and a preferred direction of the antenna.

8. Integrated radio communication system with ordered hierarchical cellular coverage according to any one of claims 4 to 7, in which
the first system (104; 304; 424) comprises a receiver configured to implement a combined processing of the signals originating from a plurality of cells of first level coverage, and
the first system is configured to distribute the first shared resources of the common portion of the first band and the first additional resources of the second band exclusively reserved for the first system,
so as to minimize the indiscriminate collisions of the data packets received by the multi-beam receiver, the discrimination method being based on the difference in received power of the signals originating from different cells of first level coverage, and included in the set formed by
- the general joint maximum likelihood sequence estimation (JMLSE) technique,
- the general synchronous successive interference cancellation (SIC) technique,
- the asynchronous successive interference cancellation technique,
- the JMSLE and SIC techniques applied in the case where the contention-based random access protocol uses a contention resolution diversity slotted ALOHA (CRDSA) protocol; and
- the spatial separation technique when the relay station of the first system comprises an antenna with electronic scan.

9. Integrated radio communication system with ordered hierarchical cellular coverage according to claim 8, in which
the discrimination method is also based on the difference in time, frequency, power, direction of arrival of the beam of the signals originating from the signals originating from different cells of first level coverage.

10. Integrated radio communication system with ordered hierarchical cellular coverage according to any one of claims 4 to 9, in which
the first and second systems (104, 106) comprise, in common, a receiver configured to implement a combined processing of the signals originating from a cell of first level coverage and from at least one cell of second level coverage and
the first system (104) is configured to distribute the first shared resources of the common portion of the first band and the first additional resources of the second band exclusively reserved for the first system,
so as to minimize the indiscriminate collisions of the data packets received by the multi-beam receiver, the discrimination method being based on the difference in time, frequency, power, direction of arrival of the beam, of the signals originating from the cell of first level coverage and from the at least one cell of second level coverage, and included in the set formed by
- the general joint maximum likelihood sequence estimation (JMLSE) technique,
- the general synchronous successive interference cancellation (SIC) technique,
- the asynchronous successive interference cancellation technique,
- the JMSLE and SIC techniques applied in the case where the contention-based random access protocol uses a contention resolution diversity slotted ALOHA (CRDSA) protocol; and
- the spatial separation technique when the relay station of the first system comprises an antenna with electronic scan.

11. Integrated radio communication system with ordered hierarchical cellular coverage according to any one of claims 1 to 10, in which
the first and second systems (104; 304; 404, 106; 306; 406) are configured to route sporadic data traffic for inter-machine communication applications.

12. Integrated radio communication system with ordered hierarchical cellular coverage according to any one of claims 1 to 11, in which
the first system (104; 304; 424) is a satellite radio communication system comprising and using at least one satellite in geostationary orbit (GSO) or non-geostationary orbit (NGSO), and
the second system (106; 306; 406) is a radio communication system comprising one or more networks of relay stations out of the high-altitude platform stations (HAPS), the base stations serving macro cells, the base stations serving micro, pico or femto cells; or
the first system (104) is a high-altitude radio communication system comprising and using at least high-altitude platform stations (HAPS), and
the second system (106) is a cellular radio communication system comprising one or more networks of relay stations out of the base stations serving macro cells, the base stations serving micro, pico or femto cells; or
the first system (104) is a cellular radio communication system comprising one or more networks of relay stations included among the base stations serving macro cells, and
the second system (106) is a cellular radio communication system comprising one or more networks of relay stations included among the base stations serving micro, pico or femto cells.

13. Integrated radio communication system with ordered hierarchical cellular coverage according to any one of claims 1 to 11, in which
the first system (104) is a satellite radio communication system comprising and using a constellation of satellites moving in low earth orbits (LEO).

14. Integrated radio communication system with ordered hierarchical cellular coverage according to any one of claims 1 to 13, configured to implement the functionalities of a 5th generation multi-vendor radio communication system combining the use of base stations serving cells out of the micro, pico and femto cells, base stations serving cells of macro cell type, high-altitude platform stations HAPS and non-geostationary or geostationary satellite systems.

15. Cellular radio communication method, implemented by an integrated radio communication system with ordered hierarchical cellular coverage, in which a cell of higher level coverage covers one or more cells of lower level,
the integrated radio communication system (102) comprising:
- a first radio communication system (104) having a first coverage level N1 and a first relay station (124) and a second radio communication system (106) having a second coverage level N2 and a second relay station (126), the first coverage level N1 being higher than the second coverage level N2; and
- a set of dual-mode terminals (114, 116), configured to selectively use the first system or the second system;
the first system (104) and the second system (106) being configured to simultaneously share a common portion Bc of a first band B1 of frequencies respectively on a first uplink (158) for access to the first relay station (124) and a second uplink (156) for access to the second relay station (126), and respectively manage first shared transmission resources and second transmission resources which use the common portion Bc of the first band B1;
the second radio communication system (106) of lower level being free to manage its second transmission resources without any coordination constraint with respect to the first system (104) of higher level, and
the first system (104) of higher level N1 being configured to not disturb the second system (106) in the common frequency band portion Bc;
said radio communication method comprising the steps consisting in that
in a first step (604), a first set of dual-mode terminals connected to the first system transmit data packets on a first uplink random access contention channel by using first shared resources of the common portion Bc of the first band, and a second set of terminals, connected to the second system, use second resources of the common portion of the first band B1; then
in a second step (606), the first system (104) measures, on the first relay station, the occupancy of the second radio resources currently used by the second system and of the first shared resources currently used by the first system (104); then
in a third step (608), as a function of the measurement of the occupancy of the second radio resources currently used by the second system (106) and of the first shared resources currently used by the first system, the first system (104) determines the first shared resources, in terms of time slots and/or frequency slots and/or access codes, to be used by new dual-mode terminals not located in the coverage of the second system (106) so as to optimize the transmission capacity of the random channel and so as to not disturb the second system (106; 306; 406) in the common frequency band portion Bc; then
in a fourth step (610), the first system (104) notifies, using a signalling channel broadcast on the downlink to the dual-mode terminals, not located in the coverage of the second system, the relevant information concerning the first resources to be used and determined in the third step (608).

16. Cellular radio communication method according to claim 15, in which
the first system (104) is configured to manage first additional resources using a second band B2 of frequencies reserved exclusively for the first uplink and the first shared resources using the common portion Bc of the first band B1, **characterized by** time slots and/or frequency slots and/or access codes, optimally in terms of maximum transmission capacity of the random channel and of minimization of the rate of collision on the random channel, and
the third and fourth steps (608, 610) are respectively replaced by respective fifth and sixth steps (658, 660) consisting in that
in the fifth step (658), as a function of the measurement of the occupancy of the second radio resources currently used by the second system and of the first resources currently used by the first system, the first system (104) determines the first resources in terms of time slots and/or frequency slots and/or access codes to be used by new dual-mode terminals, not located in the coverage of the second system, so as to optimize the transmission capacity of the random channel and to minimize the rate of collision on the random channel; and
in the sixth step (660), the first system (104) notifies, using a signalling channel broadcast on the downlink to the dual-mode terminals, not located in the cellular coverage of the second system, the relevant information concerning the first resources to be used and determined in the fifth step (658).
